# EUROPEAN PATENT SPECIFICATION

(11) **EP 2 681 139 B1**
(45) Date of publication and mention of the grant of the patent: **17.08.2016**
(21) Application number: 12710394.3
(22) Date of filing: 01.03.2012
(51) Int. Cl.: B65G 59/02, B65G 61/00

(54) **APPARATUS AND METHOD OF MANIPULATION OF ARTICLES**
VORRICHTUNG UND VERFAHREN ZUR HANDHABUNG VON GEGENSTÄNDEN
APPAREIL ET PROCÉDÉ DE MANIPULATION D'ARTICLES

(30) Priority: 01.03.2011 GB 201103450
(43) Date of publication of application: 08.01.2014
(73) Proprietor: MeadWestvaco Packaging Systems, LLC, Richmond, VA 23219-0501 (US)
(72) Inventor: MARTINI, Pascal, F-36330 Le Poinconnet (FR)
(74) Representative: Rule, John Eric
(86) International application number: PCT/US2012/027176
(87) International publication number: WO 2012/118913

(56) References cited:
- EP-A1- 0 330 994
- EP-A1- 0 594 476
- EP-A1- 0 881 175
- EP-A1- 1 908 709
- WO-A1-2010/047595
- DE-A1- 3 024 192
- DE-A1-102005 050 872
- JP-A- 58 139 926
- NL-A- 9 101 951
- US-A- 3 967 737

## Description

### FIELD OF THE INVENTION

The present disclosure relates generally to the field of apparatus for manipulating articles, initially disposed in stacks, into individual articles, or groups of articles, disposed on an outfeed conveyor and to a method of so manipulating those articles. More particularly, though not exclusively, the disclosure relates to such an apparatus that is operable to so manipulate the articles through sliding selected ones of the articles off of a top tier of the stack, and into a hand from which those articles are transferable to the outfeed conveyor and respective method of manipulation.

### BACKGROUND OF THE INVENTION

In the field of packaging it is often necessary to transport blanks, for forming cartons, in stacks so as to, for example, minimise transportation and storage costs. There is, however, a need to be able to manipulate these stacks into its individual constituent units or groups of unit in order that they may be manipulable to, for example, be folded to form cartons.

There is, therefore, a requirement for an apparatus that may be operated to automate the process of manipulating a stack of articles, such as the blanks, in a manner that renders the articles disposed on an outfeed conveyor of the apparatus as a stream of articles or of groups of articles (wherein the word "group" as used herein encompasses group sizes of one or more articles). Such an apparatus must occupy a minimised area so as to take up as little real estate in, for instance, a packaging line as possible.

EP1908709A1 to Hagenbrock, discloses an apparatus having a support base for bundles and a partially open front side for inserting bundles. A movably connected slide is provided for shifting of the bundles along a horizontal receiving direction through an open front side. The slide is provided for circumferential encompassing of the bundles and is shiftable between an outer position in front of the open front side and an inner position behind the open front side. Lateral sides running parallel to one another extend along the receiving direction of the bundles. US3967737 discloses a further example of de-stacking apparatus. In both documents, a complete layer of products is taken off the stack at once. Such systems lack flexibility and need a further step in the process to re-arrange the articles as a row of articles, for instance.

### SUMMARY OF INVENTION

The present invention seeks to overcome or at least mitigate the problems of the prior art.

According to a first aspect of the present invention there is provided an apparatus for manipulating articles initially disposed in a stack comprising a plurality of tiers of articles, which apparatus comprises a moveable head and a receptacle, the receptacle being disposable adjacent to a stack of articles characterised in that the moveable head is operable to abut and transfer a selected group of articles from an uppermost tier of the stack into the receptacle, wherein the moveable head comprises a body and a plurality of fingers for sliding said selected group of articles from the stack into the receptacle, the apparatus comprising moveable abutment plates that are moveable into contact with one or more adjacent faces of the stack so as to urge the selected group of articles in the uppermost tier of the stack into a predetermined alignment.

Preferably, the predetermined alignment of the selected group of articles is an alignment in which the moveable head is operable to be inserted at least partially into the stack thereby to abut the selected group of articles prior to transferring the selected group of articles to the receptacle.

Preferably, the moveable abutment plates include front, rear, and opposite side abutment plates that are together operable to ensure the predetermined alignment of the selected group of articles with respect to the moveable head.

Preferably, the receptacle is moveable between a first position, in which it is located adjacent the selected group of articles in the stack, and a second position, in which the receptacle is spaced from the stack.

Preferably, the receptacle is additionally rotatable so as to invert the selected group of articles.

Preferably, the apparatus further comprises an arm that is moveable into contact with a surface of the stack and operable to one or more of: a) engage with a divider sheet disposed upon said surface, and subsequently to withdraw that divider sheet from the stack and deposit it in a divider sheet receiver; or, b) impose a downward force upon one or more groups of articles of the stack, or of a divider sheet of the stack, such that the transfer of the aforesaid selected groups of articles do not result in movement of those aforesaid one or more groups of articles, or of that divider sheet; or, c) abut a surface of one or more divider sheets held in a receiver adjacent the stack, and to slide those one or more divider sheets from that receiver to a support means upon which the stack was initially disposed.

Preferably, the receptacle comprises at least one set of rotatable fingers that are operable to rotate into contact with the selected group of articles transferred into the receptacle, thereby to retain those selected group of articles in the receptacle, and rotatable away from the selected group of articles to transfer the selected group of articles to a transfer element of the apparatus.

Preferably, the transfer element comprises support struts that are configured to pass between the at least one set of fingers of the receptacle, such that the support struts may be brought into contact with the selected group of articles held in the receptacle prior to the at least one set of fingers being rotated away from the selected group of articles to transfer the selected group of articles to the support struts, the support struts being operable to convey the selected group of articles away from the receptacle.

Preferably, the apparatus further comprises a pallet riser for receiving the stack and operable to one or more of: a) raise the stack such that an upper tier thereof, including the selected group of articles, is disposable adjacent the receptacle; or, b) rotate the stack about an axis thereof.

Preferably, the pallet riser is operable, at least, to rotate the stack, and wherein the apparatus is operable, after transfer of the selected group of articles from the stack to the receptacle, to rotate the stack such that a second selected group of articles in the upper tier is disposed adjacent the receptacle, such that subsequent operation of the moveable head may transfer said second selected group of articles into the receptacle.

Preferably, the moveable head is controllable to manipulate individual tiers of the stack, by transferring the articles forming each tier into the receptacle in one or more successive transfer operations before continuing to the next tier of the stack.

Preferably, the selected group of articles is one or more of: a) inverted with respect to its desired final orientation at an outfeed of the apparatus; or, b) free of connection between the articles in the selected group; or, c) free of any retaining means for retaining the selected group of articles together in a unit.

A second aspect of the present invention provides a method of manipulating articles initially disposed in a stack comprising a plurality of tiers, the method comprises moving one or more moveable abutment plates into contact with one or more adjacent faces of the stack so as to urge a selected group of articles in the uppermost tier of the stack into a predetermined alignment; moving a moveable head comprising a plurality of fingers into abutment with the selected group of articles in the stack; moving a receptacle into a position adjacent to the selected group of articles; and sliding the selected group of articles from the stack into the receptacle by moving the moveable head towards the receptacle.

Preferably, the predetermined alignment of the selected group of articles is an alignment in which the moveable head is insertable at least partially into the stack to abut the selected group of articles prior to transferring the selected group of articles to the receptacle.

Preferably, the method further comprises moving the receptacle between a first position in which the receptacle is located adjacent the selected group of articles in the stack, and a second position in which the receptacle is spaced from the stack.

Preferably, the method further comprises rotating the receptacle so as to invert the selected group of articles therein.

Preferably, the method further comprises one or more of: a) moving an arm into contact with a proximate surface of the stack to engage a divider sheet disposed thereupon, and subsequently withdrawing that divider sheet from the stack and depositing it in a divider sheet receiver using the arm; or, b) moving an arm to impose a downward force upon one or more groups of articles of the stack, or of a divider sheet of the stack, such that the transfer of the aforesaid selected groups of articles does not result in movement of those aforesaid one or more groups of articles, or of that divider sheet; or, c) moving an arm to abut a surface of one or more divider sheets held in a receiver adjacent the stack, and to slide those one or more divider sheets from that receiver to a support means upon which the stack was initially disposed.

Preferably, the method further comprises supporting the selected group of articles on at least one set of rotatable fingers of the receptacle to retain the selected group of articles in the receptacle, and subsequently rotating the at least one set of rotatable fingers away from the selected group of articles to transfer the selected group of articles to a transfer element.

Preferably, the method further comprises one or more of: a) raising the stack such that an upper tier thereof, including the selected group of articles, is disposable adjacent the receptacle; or, b) rotating the stack about an axis thereof to bring a second selected group of articles adjacent the receptacle.

Preferably, the method further comprises operating the moveable head to manipulate individual tiers of the stack by transferring articles, forming each tier, into the receptacle in one or more successive transfer operations, before continuing to the next tier of the stack.

Preferably, the selected group of articles is one or more of: a) initially inverted with respect to its desired final orientation at an outfeed of the apparatus wherein the method includes using the receptacle to rotate the selected articles; or b) free of connection between the articles in the selected group; or c) free of any retaining means for retaining the selected group of articles together in a unit.

### BRIEF DESCRIPTION OF THE DRAWINGS

Exemplary embodiments of the invention will now be described with reference to the accompanying drawings, in which:
FIGURE 1 is a perspective view of an apparatus according to a first embodiment of the invention;
FIGURES 2 to 16 show perspective views of the apparatus of Figure 1 at respective points during one possible mode of operation thereof;
FIGURE 17 shows a side view of the apparatus of Figure 1; and
FIGURES 18 to 21 show enlarged perspective views of the apparatus of Figure 1 at respective points during one possible mode of operation of an arm thereof.

### DETAILED DESCRIPTION OF EXEMPLARY EMBODIMENTS OF THE PRESENT INVENTION

Detailed descriptions of specific embodiments of the apparatus and method of operation thereof are disclosed herein. It will be understood that the disclosed embodiments are merely examples of the way in which certain aspects of the invention can be implemented and do not represent an exhaustive list of all of the ways the invention may be embodied. Indeed, it will be understood that the apparatus and method of operation thereof described herein may be embodied in various and alternative forms. The Figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

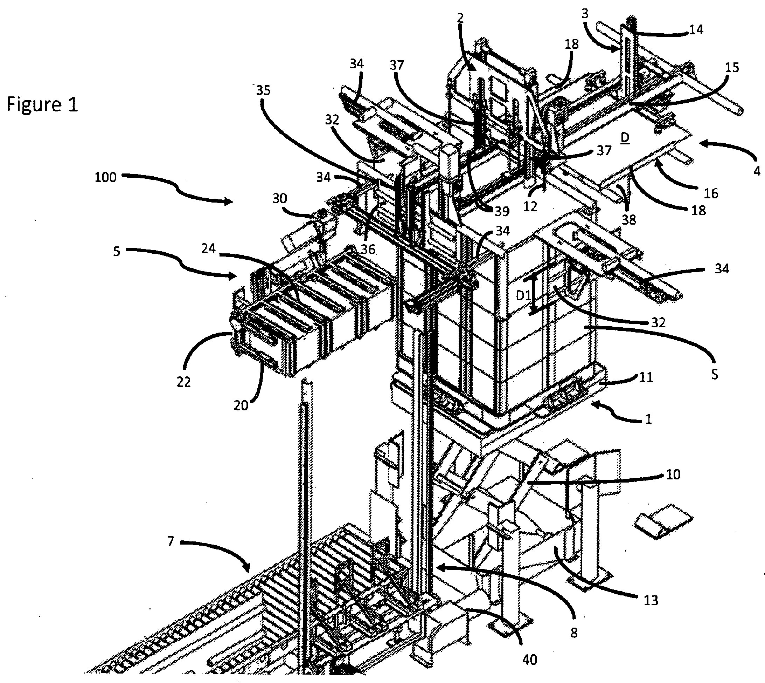

An apparatus, according to an aspect of the present invention, is shown in Figures 1 to 21. This apparatus 100 receives stacks S of articles in the form of blanks B for forming paperboard trays, and is operable to manipulate successive groups of blanks B forming that stack S to create an outfeed stream of those groups of blanks B, ready for subsequent packaging operations. In the following description, the word "group" encompasses group sizes of unitary articles, i.e. groups each consisting of a single article, and further encompasses group sizes of more than one article.

Figure 1 shows the apparatus 100 in an exemplary configuration, loaded with a stack S. The stack S is positioned on a pallet riser 1 of the apparatus, which pallet riser 1 comprises a concertina arrangement of struts 10 that connect a platform 11 and a base 13 thereof. The pallet riser 1 further comprises a drive means (not shown) that is operable to extend and retract the arrangement of struts 10 so as to effect vertical displacement of the platform 11 relative to the base 13. It is envisaged that the drive means may be, amongst others, an electric motor, a hydraulic motor, or a hydraulic or pneumatic piston. Due to the arrangement of the concertina of the struts 10, the platform 11 remains substantially parallel to the base 13 as it is so vertically displaced by the drive means. Through operation of the drive means, the height of the stack S may be raised and lowered in the manner described below. The platform 11 of the pallet riser 1 is also rotatable about, preferably, a central axis thereof, perpendicular to the upper surface of the platform 11. A drive means (not shown) such as an electric motor, hydraulic motor, or hydraulic/pneumatic pistons is provided to effect rotation of the platform 11. Preferably, the platform 11 is rotatable freely over any angle, such that successive rotations may be made in the same direction. This may be achieved, for example, by providing a drive means in the form of a motor that is operable to turn the platform, via gearing, to some desired angle.

The stack S may be formed, as in the illustrated embodiment, of successive tiers of blanks B; each tier comprising an array of groups of blanks B disposed in a 2x3 with each group comprising blanks B placed flat upon a primary surface (as opposed to a peripheral edge) thereof. In one aspect, the apparatus is operable to divide the stack S into these individual groups of blanks B by inserting a moveable head 2 into apertures defined in each tier of the stack S, and pushing selected ones of those groups of blanks B off of the stack S and into a waiting receptacle that will be referred to hereinafter as a hand 5. To accomplish this, it is necessary that the moveable head 2 be correctly aligned over the top of the stack S so as to be correctly insertable between neighbouring groups of blanks B. To ensure this alignment is accomplished a series of abutment plates is provided that are operable to move into abutment with proximal surfaces of the groups of blanks B forming the upper tier of stack S, thereby to correct any deviation in their alignment with regards to the moveable head 2.

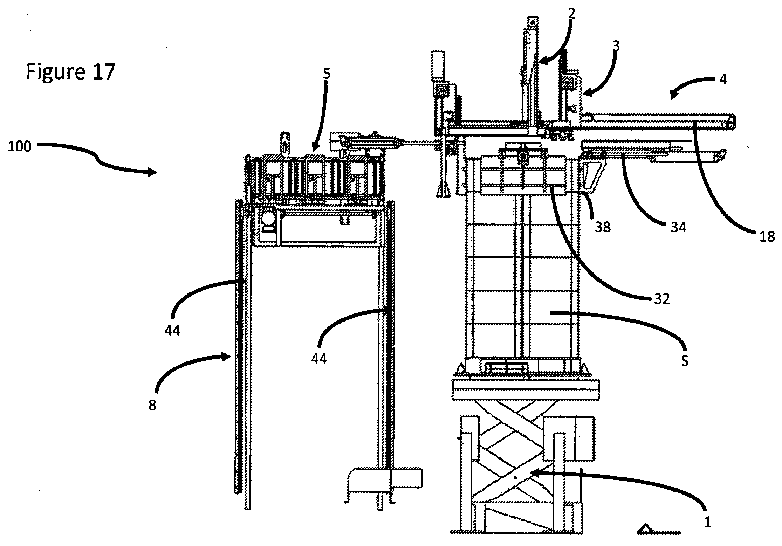

The abutment plates comprise opposing first and second side abutment plates 32 and opposing front 36 and rear 38 abutment plates and extend vertically downwardly to provide abutment surfaces substantially parallel to adjacent surfaces of the stack S. The side 32, front 36 and rear 38 abutment panels are all slideably engaged with a fixed frame of the apparatus, via the runners 34. The abutment plates 32, 36, 38 preferably each have an independent drive means to control their movement, such as, amongst others, an electric motor, hydraulic motor or a hydraulic/pneumatic piston. Through operation of these drive means the abutment plates 32, 36, 38 are reciprocally translatable into and out of contact with adjacent faces of the stack S, with sufficient motive force that correction in alignment of the top tier groups of blanks B may be effected. A side view of the apparatus 100, shown in Figure 17, illustrates the relative positioning of the rear abutment plate 38 relative to the stack S.

The front abutment plate 36 is additionally slideably mounted for vertical movement substantially parallel to an adjacent surface of the stack S. Preferably, this vertical displacement of the front abutment plate 36 is provided for by a secondary runner arrangement 35 extending upwardly perpendicular to the runners 34 that is driven by further drive means such as an electric motor, hydraulic motor or hydraulic/pneumatic piston. This secondary runner arrangement interconnects the front abutment plate 36 and the runner 34 and is, itself, slideably engaged with the runner 34. The vertical displacement of the front abutment plate 36 allows it to be drawn out of the path of the groups of blanks B as they are slid from the top tier of the stack S by the moveable head 2 in the manner described below. Thus the front abutment plate 36 is vertically slideable, along the secondary runner arrangement 35, between a first position in which a lower edge thereof is at the same height or lower than a lower edge of the top tier of the stack S, and a second position in which the lower edge of the front abutment plate 36 is higher than a top edge of that top tier, thereby groups of blanks B from that top tier to be slid underneath the front abutment plate 36.

Preferably, the vertical dimension of each of the abutment plates 32, 36, 38 is equal to or greater than the vertical dimension of the tiers of the stack S so that the abutment plates are able to simultaneously contact all of the adjacent peripheral edges of the blanks B forming the selected groups of blanks B to be slid from the stack S.

The apparatus 100 further comprises an arm 3 that, in the illustrated embodiment, is in the form of an inverse "T" shape. This arm 3 is vertically and horizontally displaceable by virtue of corresponding horizontal 15 and vertical 14 runners. Preferably the horizontal runner 15 is fixed with respect to a fixed frame of the apparatus and the vertical runner 14 interconnects this horizontal runner 15 and the arm 3 so as to allow vertical displacement thereof. Drive means (not shown) such as an electric motor, hydraulic motor or a hydraulic/pneumatic piston amongst others are provided to controllably effect displacement of the arm 3 both horizontally and vertically (preferably in the form of two separate drive means) so as to allow an engaging head, mounted on a transverse end 19 of the "T" shape of the arm 3, to be lowerable down into contact with an upper surface of the stack S. In addition, the arm 3 further comprises an extendable abutment portion 17 that is slideably engaged with the remainder thereof, for relative vertical movement with respect to the remainder of the arm, such that the offset between a lowermost portion of the aforementioned transverse end 19 of the arm 3 and a lowermost end of that abutment portion 17 may be varied by operation of a drive means thereof. Where the arm 3 is operated to manipulate the divider sheets D, it is envisaged that the abutment portion 17 would advantageously be raised to avoid fouling the surfaces of those sheets. However, the abutment portion 17 is also lowerable to extend beneath that transverse end 19 for use in the manner described below.

Between each tier of blanks B in the stack S there is provided a divider sheet D. These divider sheets serve to protect the side edges of the blanks of adjacent tiers from damaging one another and also prevent the groups of blanks B of each tier from separating by tying them together. The arm 3 described above is operable to engage with these divider sheets D as they become exposed and to transfer them from the top surface of the stack S to a divider receiver 4.

The divider receiver 4 is provided behind stack S, over the rear abutment plate 38, and comprises a base 16 extending between opposing side walls 18. The base 16 provides a surface for supporting the divider sheets D once disengaged by the arm 3 and the side walls 18 maintain the divider sheets D in at least loose alignment with one another such that a group thereof may be relatively easily manipulated for removal.

The moveable head 2 comprises a body from which depend a number of engaging fingers 12. The engaging fingers 12 are mounted on the body in such a manner that each is simultaneously alignable over boundaries between neighbouring groups of blanks B of the uppermost tier of the stack S, and are sized and shaped to fit between bordering edges of those groups where, for instance, an aperture is formed by juxtaposed recesses in those bordering edges. The length of the engaging fingers 12 is at least as long as the depth of the groups of blanks B, so that the engaging fingers 12 may abut peripheral edges of all of the blanks B in a given tier simultaneously. Preferably, the length of the engaging fingers 12 is greater that the depth of the tiers of the stack S, and they are slideably engaged with the body of the moveable head 2 such that the moveable head 2 may be lowered by some amount after the engaging fingers 12 contact a surface. More preferably still, the moveable head comprises one or more sensors that detect one or more positions of the engaging fingers 12 as they slide relative to the body. These sensors serve to give an indication when the degree of movement of the engaging fingers 12 exceeds an expected maximum. The slideable engagement between the engaging fingers 12 and the body of the moveable head 2 reduces the accuracy requirement for the position of the moveable head 2 with regards to the bottom of the tier of the stack S and increases tolerance of small variations in tier depth between the various tiers of the stack S. The slideable engagement may be accomplished by mounting the engaging fingers 12, which take the form of straight rods, through apertures formed in the body of the moveable head 2 with upper and optionally lower stops to limit the downward and upper relative movement of the engaging fingers 12 accordingly. The moveable head 2 is slideably engaged for both vertical and horizontal motion relative to the top surface of the stack S by virtue of a sliding engagement with upright runners 37, along which it is slideable to effect vertical displacement thereof as controlled by a drive means (not shown). The vertical runners 37 themselves are each slideably attached to a horizontal runner 39 that extends across the top surface of the stack S towards the hand 5. The horizontal runners 39 are preferably mounted on the fixed frame of the apparatus 100 to support the moveable head 2. Drive means are provided to effect each of the horizontal and vertical displacement of the moveable head 2, which drive means may be, amongst others, electric or hydraulic motors or hydraulic/pneumatic pistons. In this manner the moveable head 2 is controllably lowerable to insert the engaging fingers 12 into the aforementioned apertures, and to horizontally displace the groups of blanks B disposed between those fingers 12 and the hand 5, off of the stack S. The divider sheets D are of particular advantage where the engaging fingers 12 are so slideably engaged with the body of the moveable head 2 because the material of the divider sheet acts as a lower abutment surface of the engaging fingers 12 that ensures that engaging fingers 12 extend the complete depth of the tier of the stack S in question, and not beyond. If the aforementioned sensors are incorporated, a control unit of the apparatus communicates with those sensors and is configured to take action when the relative movement of the engaging fingers 12 and the body of the moveable head is too great, such as, for example, halting the apparatus to raise the moveable head to allow the perceived obstacle or misalignment to be overcome.

The hand 5 is pivotable via a first pivotable connection 30 that is fixed in position in some manner such as, for example, to the fixed frame of the apparatus. Via this first pivotable connection 30 the hand 5 is rotatable to be brought from a first position in which it is disposed away from the stack S, perpendicular thereto, into a second position juxtaposed an adjacent face of the stack S, from which the moveable head 2 is operable to push a selection of groups of blanks B thereinto. The hand 5 comprises a drive means (not shown) to effect rotation about the first pivotable connection 30, such as an electric or hydraulic motor, or a hydraulic/pneumatic piston. The hand 5 further comprises upper 24 and lower 26 fingers that are pivotable to provide a supporting surface for the groups of blanks B so received from the stack S. The rear ends of the upper 24 and lower 26 fingers are hinged to corresponding upper and lower edges of a back plate 22 of the hand 5, and controllable by operation of corresponding first and second drive means such that they are rotatable relative to a back plate 22 of the hand 5. The hand 5 is further rotatable about a preferably central axis, extending perpendicular to the back plate 22, such that the upper fingers 24 are disposable lowermost and the lower fingers 26 uppermost. This rotation is achieved by a second pivotable connection 28 between the back plate 22 and the first pivotable connection 30. Preferably, a connecting arm extends from the first pivotable connection 30 to the second pivotable connection 28. A drive means is provided, such as an electric or hydraulic motor, or hydraulic/pneumatic piston, to control and effect the rotation of the hand 5 about the second pivotable connection 28. At either horizontal end of the backing plate 22 there are provided end stops 20 that extend perpendicular to the backing plate 22 between adjacent ends of the upper 24 and lower 26 fingers of the hand 5. These end stops 20 act to prevent articles, such as the groups of blanks B, disposed in the hand 5, from sliding out from between the upper 24 and lower 26 fingers in a direction parallel to the length of the back plate 22.

Disposed beneath the hand 5, when in the aforesaid first position, is a transfer element 8, which transfer element 8 comprises upright runners 44, along which are slidingly engaged support struts 42. These support struts 42 are arranged in an array and extend horizontally outward, from between the upright runners 44, beneath the hand 5. The support struts 42 are controllable by a drive means such as an electric or hydraulic motor, or hydraulic/pneumatic piston, to effect reciprocal upward and downward motion relative to the hand 5, thereby to enable the transfer element to move between a first position in which the support struts 42 are disposed directly beneath the hand 5, and a second position in which the support struts 42 are disposed at or beneath a level of an outfeed conveyor 7 below. The support struts 42 are spaced from one another such that they are each out of vertical registry with the upper 24 or lower 26 fingers of the hand 5. In this manner, the transfer element 8 may be brought up into its aforementioned first position, and the proximate ones of the upper 24 and lower 26 fingers may be rotated relative the back plate 22 of the hand 5 without fouling the upper surfaces of the support struts 42 and thus transfer support of the groups of blanks B disposed in the hand 5 to the support struts 42.

The outfeed conveyor 7 disposed beneath the transfer element 8 comprises a sequence of side by side rollers, driven by a drive means such as an electric or hydraulic motor, operable to convey groups of blanks B deposited thereupon by the transfer element 8 to an outfeed of the apparatus 100. The support struts 42 of the transfer element 8 are aligned between the rollers of the outfeed conveyor 7, so that they may be lowered to or beneath the level of the upper surfaces of those rollers without being fouled thereby, so as to allow the outfeed conveyor to support any groups of blanks B disposed thereupon, and to convey those groups of the blanks B, so supported, away from the transfer element 8 prior to the transfer element 8 being raised to receive a further group of blanks B from the hand 5.

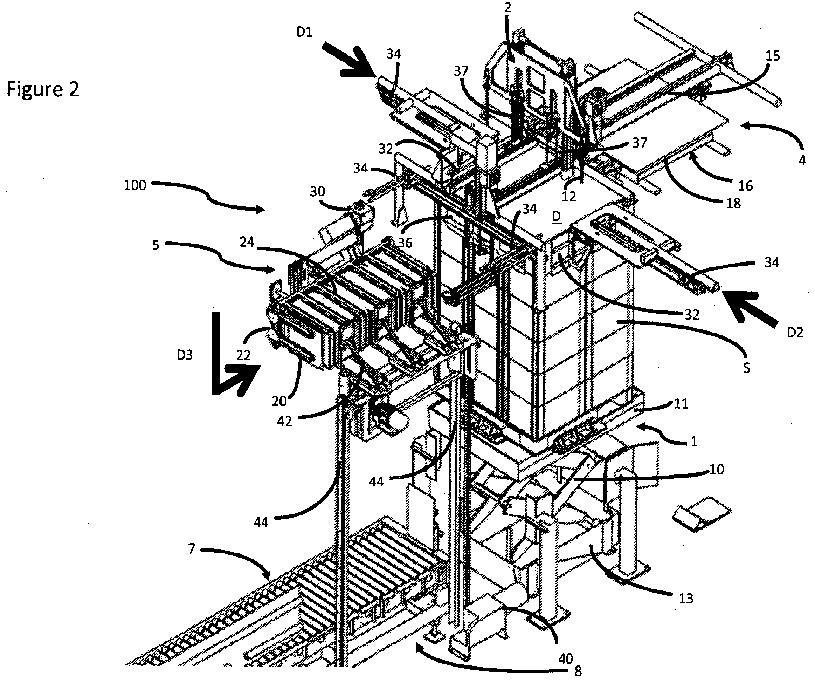

One possible process of operation of apparatus 100 will now be described, making reference to Figures 2 to 16. This process may be employed to manipulate a stack S of blanks B, formed of tiers each comprised of groups of blanks B, which groups are disposed in each such tier in the 2x3 array arrangement described above, into a flow of grouped blanks B on an outfeed conveyor 7.

The stack S is first positioned upon the pallet riser 1 in some manner known in the art such as, amongst others, manual positioning, or positioning by a fork lift truck or similar. Once positioned upon the pallet riser 1, the platform 11 of the pallet riser 1 is raised, through operation of its associated drive means, to lift the stack S until a top edge of the uppermost tier thereof is disposed at or beneath top edges of the side and rear abutment plates 32, 38 and a lower edge of that uppermost tier is disposed at or above lower edges of those abutment plates 32, 38, as is the illustrated case in Figure 1.

With the stack S in position, and the platform 11 controlled to maintain its elevation, the side 32 and rear 38 abutment plates are slid towards the adjacent faces of the stack S and into contact with at least the uppermost tier thereof, in respective directions D1 and D2. The front abutment plate 36 is first lowered down its secondary runner arrangement 35 until it is level with the side 32 and rear 38 abutment plates, and is then slid horizontally into contact with the front face of the uppermost tier of the stack S, as indicated by arrow D3. The uppermost tier of the stack S is thus contacted by the side 32, front 36 and rear 38 abutment plates along all its four faces. By this means, the abutment plates 32, 36, 38 constrain that tier to a predetermined position to ensure alignment with respect to the moveable head 2.

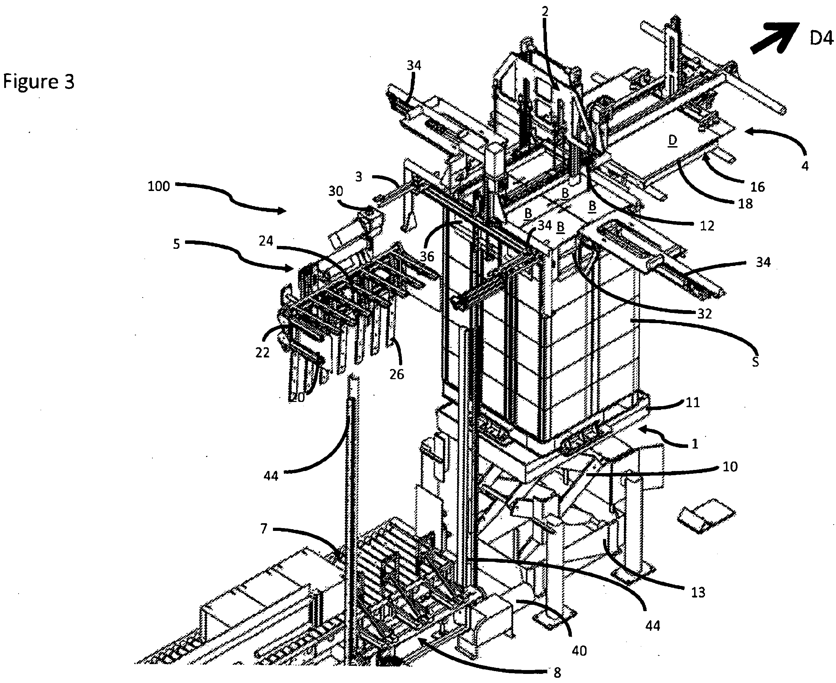

Where the stack S comprises a divider sheet D disposed over the top surface of the uppermost tier, it is necessary for this divider sheet D to be removed prior to the insertion of the engaging fingers 12 of the moveable head 2 into the top tier of the stack S. The "T" shaped arm 3 is thus positioned over a rearward portion of the top surface of the stack S (proximate the divider receiver 4) and lowered down into contact with the divider D. Engaging means on the contacting surfaces of the arm 3, such as suction heads, are activated to engage the divider sheet S. The arm is then driven upward and outward, in direction D4 illustrated in Figure 3, from the centre of the stack S to drag the divider sheet D over to the divider receiver 4, over which the divider sheets is deposited on top of any other divider sheets D that may already be held therein. The arm 3 returns to its initial position over and above the rearward portion of the stack S.

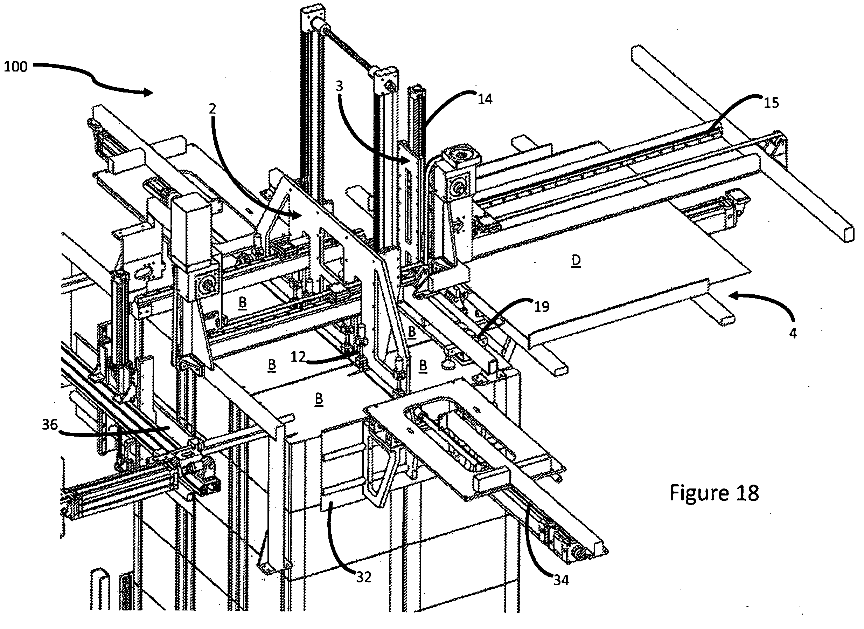

The removal of the divider sheet D reveals the underlying array of groups of blanks B, which groups define, between juxtaposed recesses in bordering edges thereof, a number of apertures into which the engaging fingers 12 of the moveable head 2 may be inserted. Preferably, the arm 3 is returned to its initial position over a rearward portion of the stack S, such that it may be lowered down into contact with the groups of blanks B disposed along a rearward edge of the stack S distal from the hand 5, as best shown in Figure 18. More preferably still, the arm 3 at least engages the topmost blanks of a portion of those groups, or imparts a downwards force on those groups, so as to aid maintaining those groups of blanks in a fixed position (not shown). Imparting a downward force on the groups of blanks B is advantageous in that it imparts a frictional resistance to movement of the blanks B forming those groups, as well as any divider sheets D and further groups of blanks B lying therebeneath in the stack S.

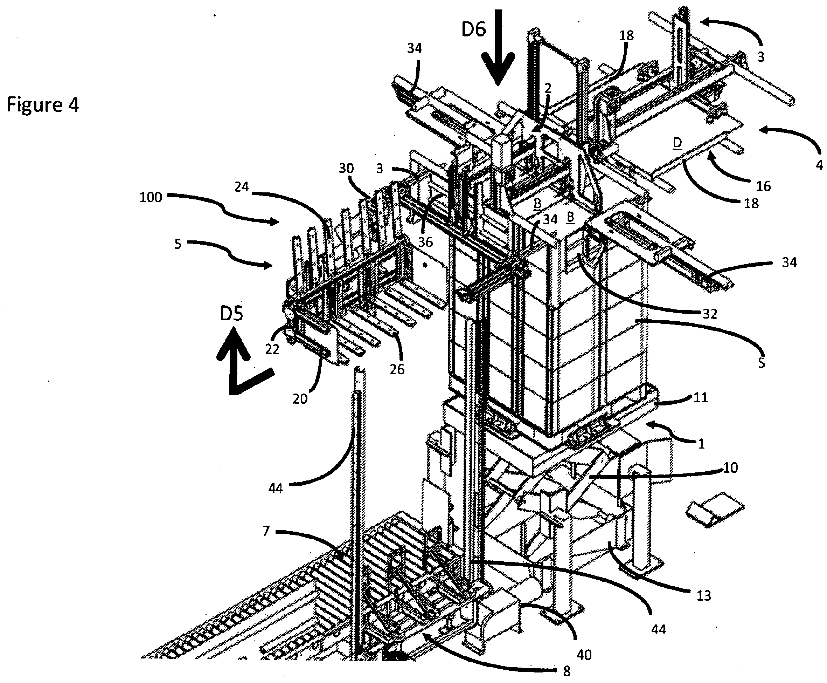

The moveable head 2 is lowered towards the upper surface of the stack S, in direction D6 shown in Figure 4, until its engaging fingers 12 are so inserted and such that they extend fully down those apertures the entire depth of the top tier of the stack S. In this manner the apparatus 100 is ready, through horizontal displacement of the moveable head 2, to slide the groups of blanks B forming the "front" half of the top tier, which is to say those groups of blanks B that are disposed along the edge of the stack proximate the hand 5 and front abutment plate 36, off of the stack S. Before this may be achieved, however, it is necessary for at least the front abutment plate 36 to be withdrawn from contact with that edge of the stack S and raised out of the intended path of those groups of blanks B, as is indicated by D5 in Figure 4. The front abutment plate 36 is therefore withdrawn along the runner 34 and raised up the secondary runner arrangement 35 such that its bottom-most edge is higher than the uppermost surface of the top tier of the stack S.

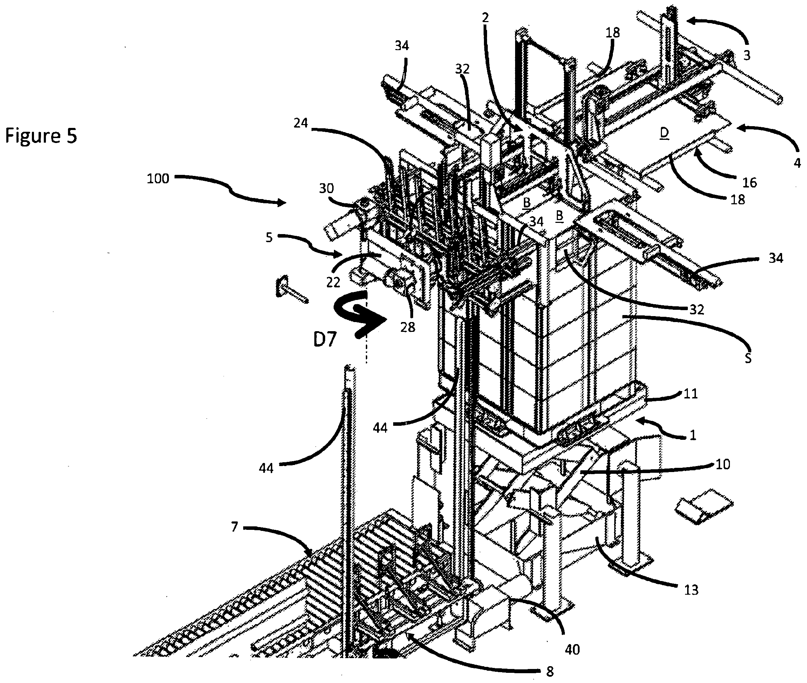

The hand 5 is then rotated, in direction D7 shown in Figure 5, about the first pivotable connection 30 and into position proximate those front groups of blanks B such that it may act to support those groups of blanks B as they are slid from the top tier of the stack S. The lower fingers 26 of the hand 5 provide a substantially horizontal platform upon which the groups of blanks B may rest, and these extend beneath the front abutment plate 36. The upper fingers 24 of the hand 5 are rotated upwardly to extend substantially vertically and perpendicular to the lower fingers 26 such that the upper fingers 24 do not foul the lower edge of the front abutment plate 36 as the hand 5 is swung into position adjacent the stack S.

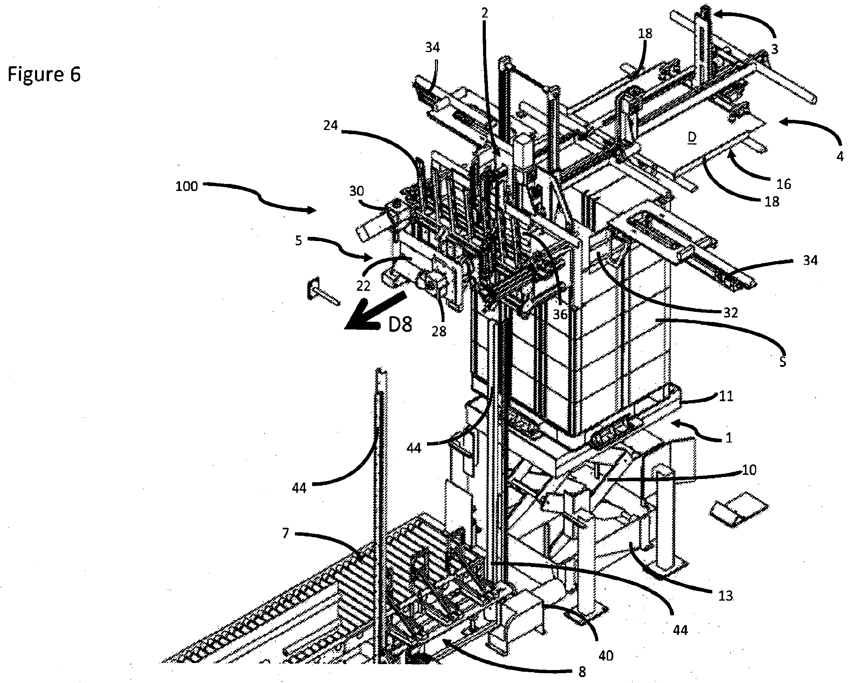

The moveable head 2 is then displaced in direction D8, shown in Figure 6, towards the hand 5 so as to slide the interposed groups of blanks B off of the stack S and onto the lower fingers 26 of the hand 5. Preferably, the groups of blanks B are displaced horizontally until they meet the back plate 22 of the hand 5 although they need not necessarily be displaced this far. The arm 3 helps resist any potential movement of the remaining groups of blanks B of the stack S as these selected groups of blanks B are slid into the hand 5.

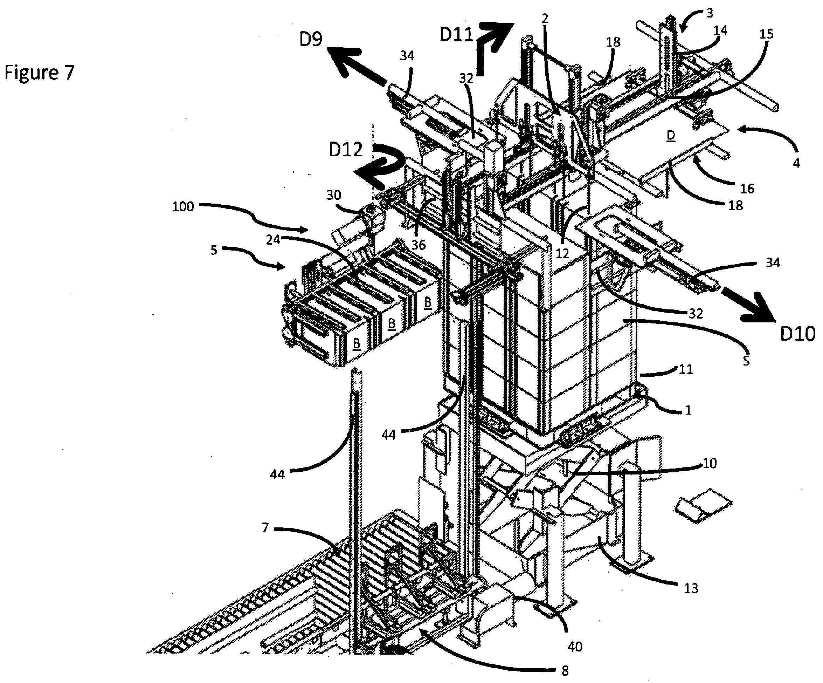

The hand 5 is then rotated back, in direction D12 shown in Figure 7, to its original position distal from the stack S, with the back plate 22 therefore substantially perpendicular to the front abutment plate 36 and the proximal face of the stack S. The upper fingers 24 are rotated downwardly towards the upper surface of the groups of blanks B so as to, preferably, grip the groups of blanks B between the upper fingers 24 and the lower fingers 26, although it is envisaged that this "grip" is not essential. The collection of groups of blanks B is thus enclosed about five sides by the upper 24 and lower 26 fingers, backing plate 22 and the stops 20 of the hand 5.

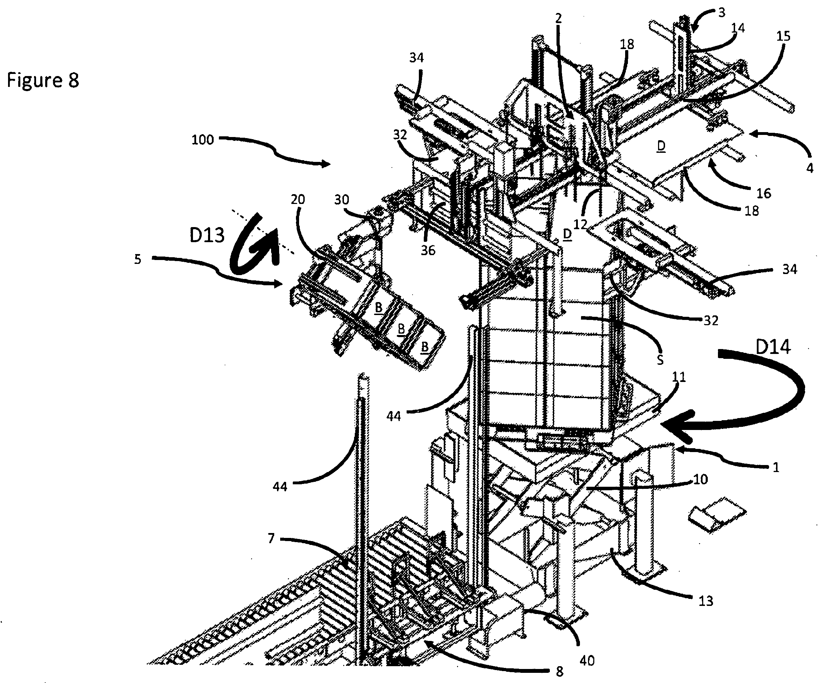

The hand 5 is then rotated, in direction D13 shown in Figure 8, about its second pivotable connection 28 such that the lower fingers 26 thereof are disposed uppermost and the upper fingers 24 lowermost. This is not an essential step and is carried out preferably in instances where there is a desire for the blanks B to be ultimately disposed, at an outfeed end of the apparatus 100, in an inverted orientation relative to their initial disposition in the stack S. The drive means linked to the second pivotable connection 28 of the hand 5 instigates a 180° rotation of the hand 5 about, preferably, a central axis thereof extending perpendicularly to the back plate 22. The hand 5 therefore remains in vertical alignment above the transfer element 8.

The moveable head 2, having successfully displaced the front groups of blanks B off of the stack S is subsequently withdrawn to its initial position disposed centrally over and above the stack S, as indicated by arrow D11 in Figure 7. The lowermost points of the engaging fingers 12 clear the upper surface of the remaining groups of blanks B of the top tier of the stack S so as not to foul the rotation thereof described below. Likewise the side 32 and rear 38 abutment plates are also withdrawn away from the respective surfaces of the stack S, along respective directions D9 and D10 shown in Figure 7, to their initial positions so as to avoid fouling rotation of the stack S. If previously used to retain the remaining groups of blanks B in position, the arm 3 is also raised away from the stack S (not shown). The platform 11 of the pallet riser 1 is then controllably rotated about an angle of 180°, as indicated by arrow D14 in Figure 8, such that the remaining groups of blanks B disposed in the top tier thereof are then disposed along an edge thereof closest to the hand 5, ready to be displaced thereinto.

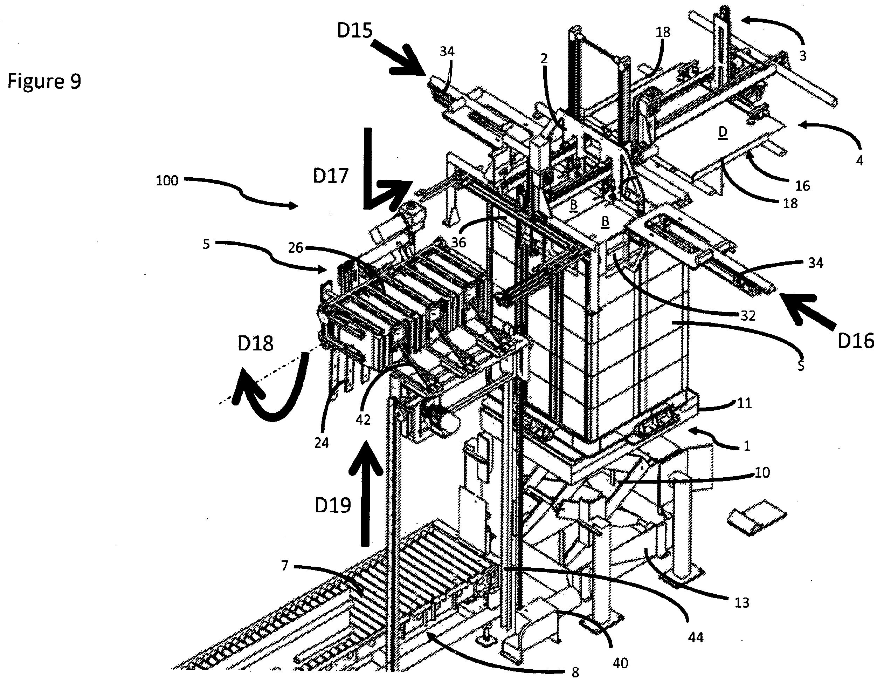

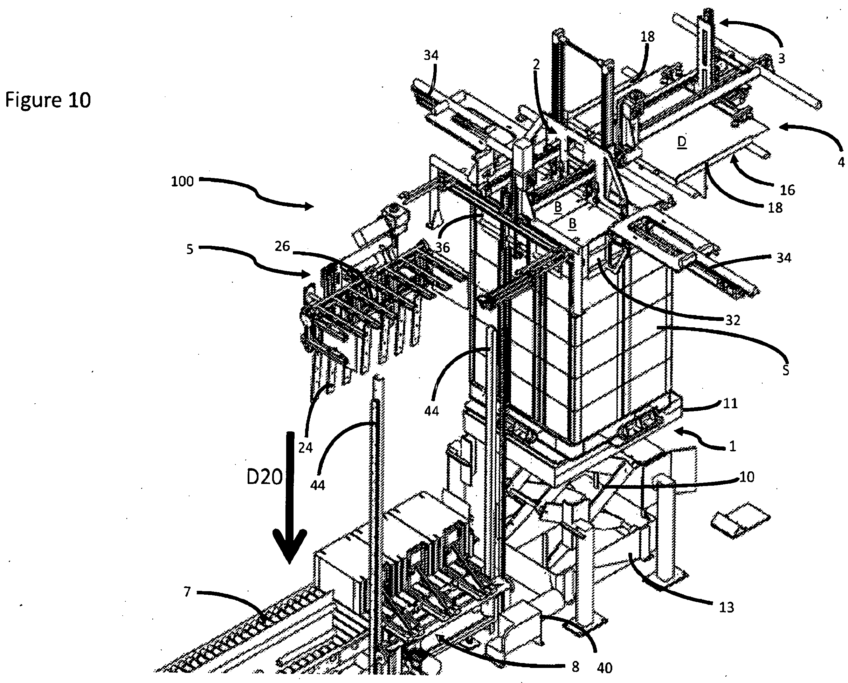

The hand 5 is relieved of the groups of blanks B held therein by the transfer element 8. The transfer element 8 is raised in direction D19, shown in Figure 9, until the supporting struts 42 thereof contact a lowermost surface of the groups of blanks B, those supporting struts 42 interleaving between the upper fingers 24 (now disposed lowermost due to the rotation of the hand 5). The upper fingers 24 are then rotated away, in direction D18 shown in Figure 9, from the groups of blanks B to transfer support thereof to the support struts 42 of the transfer element 8. To remove the groups of the blanks B completely from the hand 5, the support struts 42 of the transfer element 8 are lowered in direction D20 shown in Figure 10, along the upright runners 44 of the transfer element 8 to the level of, or below, the rollers of the outfeed conveyor 7 below. These rollers then, in turn, convey the groups of blanks B horizontally away from the support struts 42 of the transfer element.

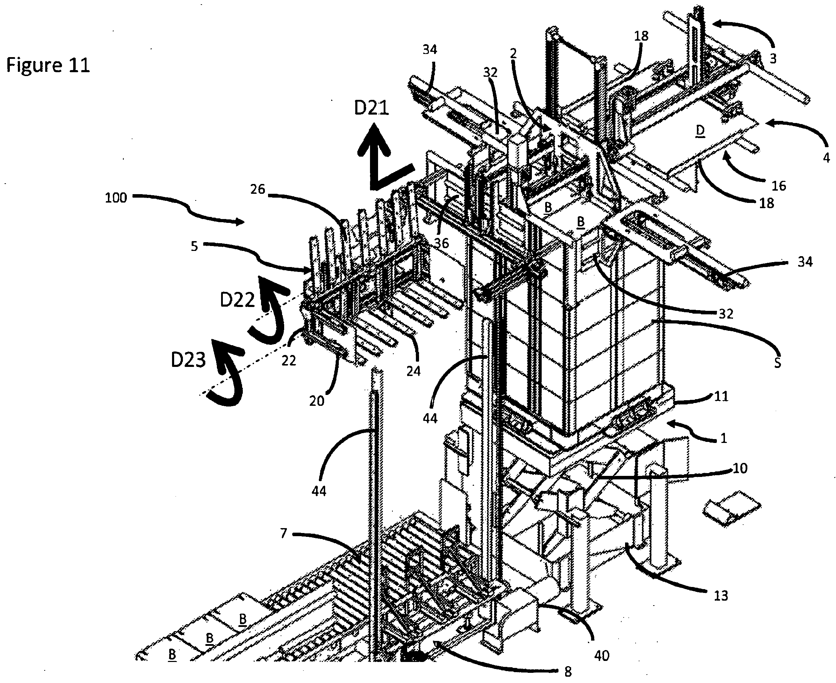

The hand 5, having been relieved of the groups of blanks B, then is controlled to ready it for the remaining groups of blanks B from the top tier of the stack S. The upper fingers 24 are rotated upwardly in direction D23 shown in Figure 11, to extend horizontally from the back plate 22 whilst the lower fingers 26 are rotated upwardly, in direction D22, to extend substantially vertically upward from the back plate 22. The hand 5 thereby is disposed in substantially the same manner as it was prior to being loaded with the previous collection of groups of blanks B, but this time the upper fingers 24 are readied to provide support for those groups of blanks B and the lower fingers 26 extend upwardly to avoid fouling the front abutment plate 36, because of the 180° rotation of the hand 5.

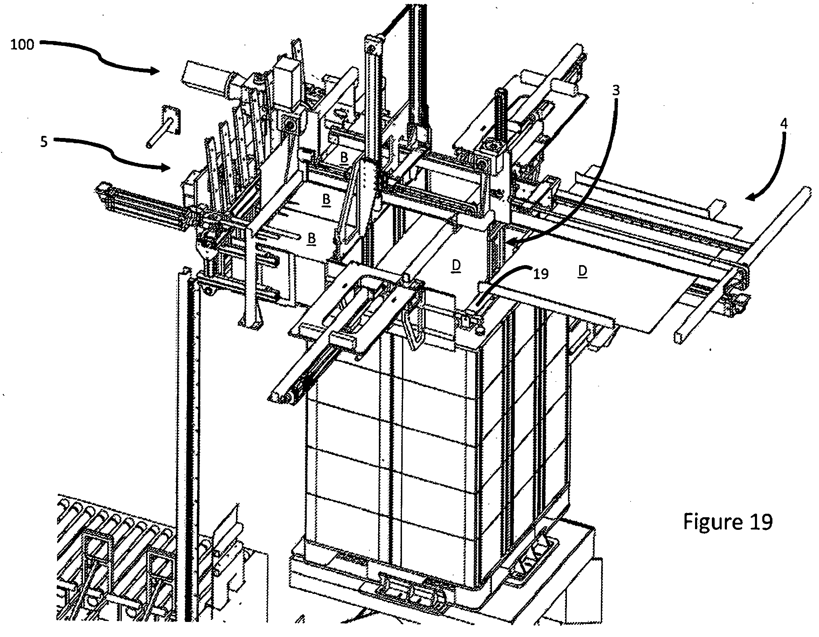

As the hand 5 is being relieved of the groups of blanks B, the top tier of the stack S is again enclosed by bringing the front 36 and side 32 abutment plates into contact with the adjacent surfaces of that top tier, along respective directions D15, D16 and D17 as shown in Figure 9. The rear abutment plates 38 may also be offered up the stack S but this is not necessary because the top tier of the stack S no longer comprises any groups of blanks B along the rear edge thereof proximal the rear abutment plate 38. The side 32 and front 36 abutment plates ensure that the front groups of blanks B are correctly aligned beneath the moveable head 2 before that moveable head is again lowered into abutment with rear edges thereof in readiness to slide those remaining groups of blanks B onto the hand 5. Preferably, the arm 3 may again be lowered, down the level of the divider sheet D (if present) underlying the top tier of the stack S, to engage with and/or impart a downward force thereupon to help retain it, and the groups of blanks therebeneath in a fixed position, as is best shown in Figure 19.

With the moveable head 2 lowered into position, the front abutment plate 36 is withdrawn again from the stack S and raised along its secondary runner arrangement 35, in the manner indicated by D21 in Figure 11, such that the lower edge thereof is higher than the upper surface of the remaining groups of blanks B of the top tier of the stack S.

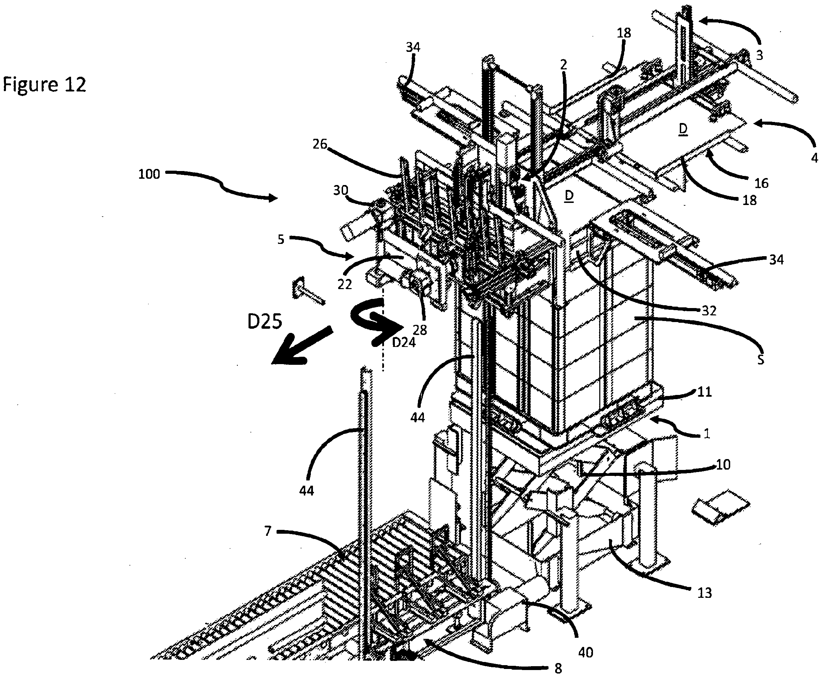

The hand 5 is again pivoted, about its first pivotable connection 30, in direction D24 shown in Figure 12, into position adjacent the remaining groups of blanks B of the top tier of the stack S. The lower fingers 26 extend upwardly proximal the front abutment plate 36 and the upper fingers 24 extend horizontally toward the stacks S to support the groups of blanks B. The moveable head 2 is then displaced horizontally towards the hand 5, in direction D25, such that the remaining groups of blanks B of the top tier of the stack S are slid from the stack S into the hand 5. If used to retain the underlying divider sheet D, the arm 3 helps prevent that divider sheet D from sliding as the selected remaining groups of blanks B are slid into the hand 5.

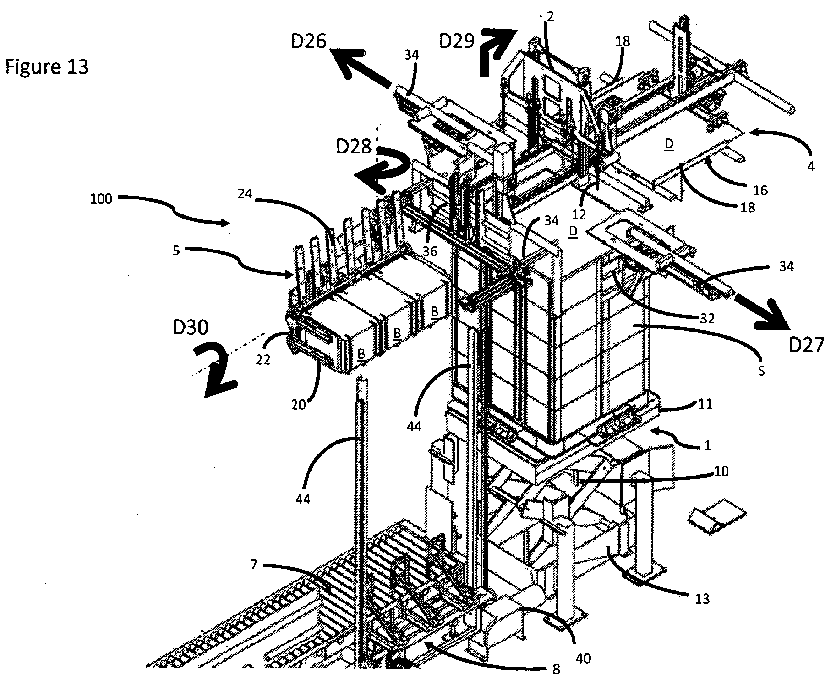

The hand 5 is then rotated back to its previous position distal from the stack S, in direction D28 shown in Figure 13, with the back plate 22 therefore substantially perpendicular to the front abutment plate 36 and the proximal face of the stack S. The lower fingers 24 are rotated downwardly about direction D30 shown in Figure 13, towards the upper surface of the groups of blanks B so as, preferably, to grip the groups of blanks B between the upper fingers 24 and the lower fingers 26. The collection of groups of blanks B is thus enclosed about five sides by the upper 24 and lower 26 fingers, backing plate 22 and the stops 20 of the hand 5.

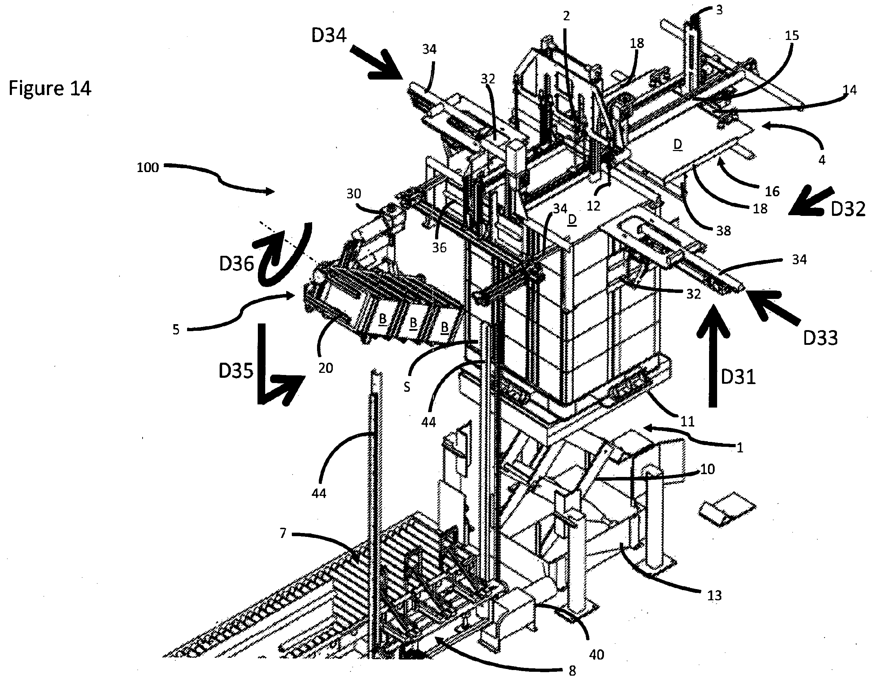

The hand 5 is then rotated about its second pivotable connection 28, in direction D36 shown in Figure 14, such that the upper fingers 24 thereof are once again disposed uppermost and the lower fingers 24 lowermost. The drive means linked to the second pivotable connection 28 of the hand 5 instigates the 180° rotation of the hand 5 about, preferably, a central axis thereof extending perpendicular to the back plate 22. The hand 5 therefore remains in vertical alignment above the transfer element 8.

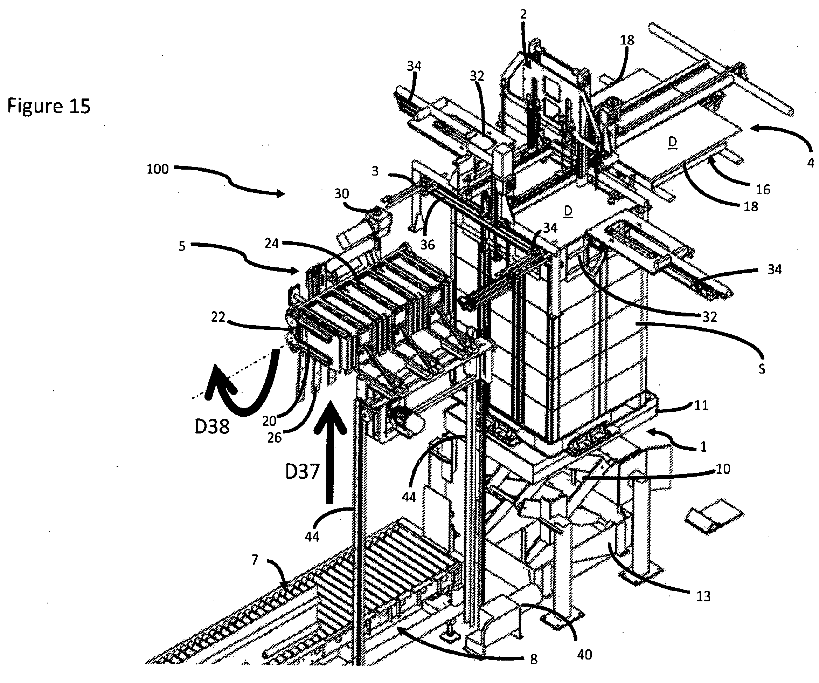

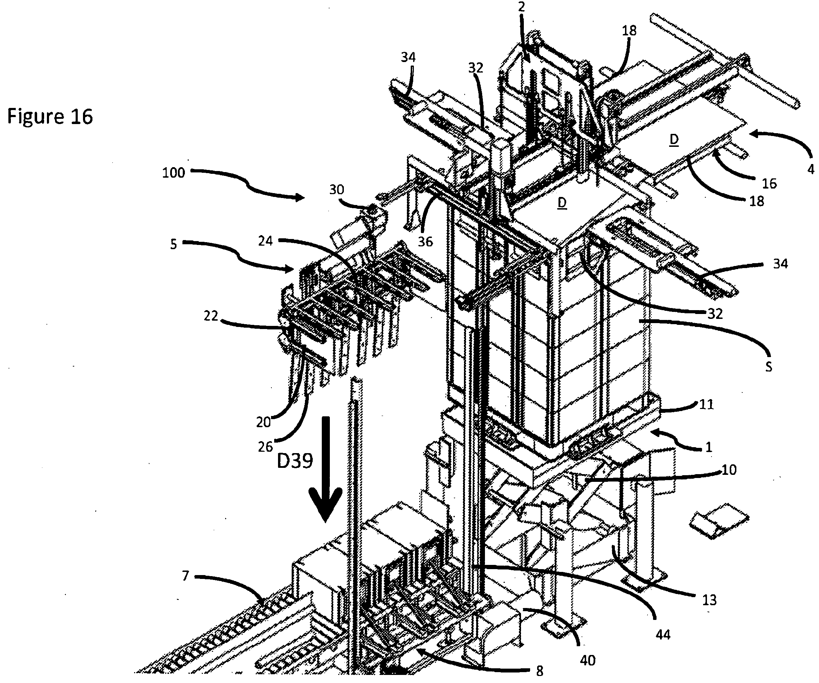

The hand 5 is again relieved of the groups of blanks B held therein by the transfer element 8. The transfer element 8 is raised in direction D37 shown in Figure 15 until the supporting struts 42 thereof contact a lowermost surface of the groups of blank B, those supporting struts 42 interleaving between the lower fingers 26. The lower fingers 26 are then rotated away, in direction D38, from the groups of blanks B to transfer support thereof to the support struts 42 of the transfer element 8. To remove the groups of the blanks B completely from the hand 5, the support struts 42 of the transfer element 8 are lowered along the upright runners 44 of the transfer element 8 to the level of, or below, the rollers of the outfeed conveyor 7 below, in direction D39 shown in Figure 16. These rollers then, in turn, convey the groups of blanks B horizontally away from the support struts 42 of the transfer element.

As the hand 5 is being relieved of the groups of blanks B held therein, the moveable head 2, having successfully displaced the remainder of the groups of blanks B forming the top tier of the stack S, is subsequently withdrawn to its initial position disposed centrally over, and above the stack S as indicated by arrow D29 in Figure 13. The side 32 abutment plates are withdrawn away from the respective surfaces of the stack S, in directions D26 and D27 respectively, to their initial positions so as to avoid fouling the stack S as it is raised by the pallet riser 1. If the arm 3 was used to retain the underlying divider sheet D in place, it is now raised above the surface of the stack S.

The pallet riser 1 is then controlled to raise the stack S in direction D31, such that the new top tier of the stack S lies between the abutment plates 32. The withdrawal of the abutment plates 32, 36, 38 ensures that any misaligned portions of this new top tier of the stack S do not catch upon any lower edges of those abutment plates 32, 36, 38 as the pallet is so raised. Once raised, the top tier of the stack S is again enclosed by the front 36, side 32 and rear 38 abutment plates by moving them inwardly as shown by arrows D32, D33, D34 and D35 in Figure 14.

The hand 5, having been relieved of the groups of blanks B, is then controlled to ready it for the remaining groups of blanks B from the top tier of the stack S. The lower fingers 26 are rotated upwardly to extend horizontally from the back plate 22 whilst the upper fingers 24 are rotated upwardly to extend substantially vertically upward from the back plate 22 in the manner illustrated in Figure 4.

The apparatus is thus returned substantially to its initial configuration, ready to manipulate the new top tier of the stack S into successive groups of blanks B upon the outfeed conveyor 7. The above steps are therefore repeated until all of the groups of blanks B forming the stack S have been so manipulated, at which point a new stack S may optionally be loaded onto the pallet riser 1, once the platform 11 thereof has been sufficiently lowered.

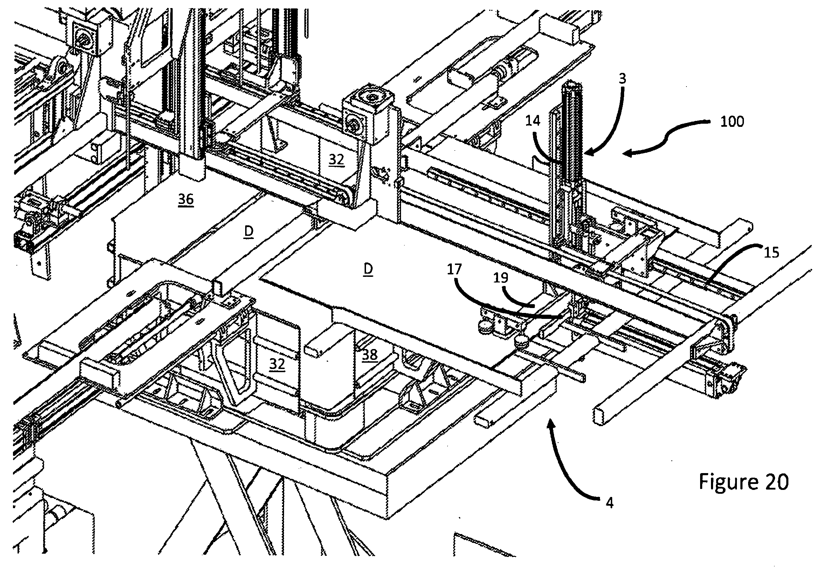

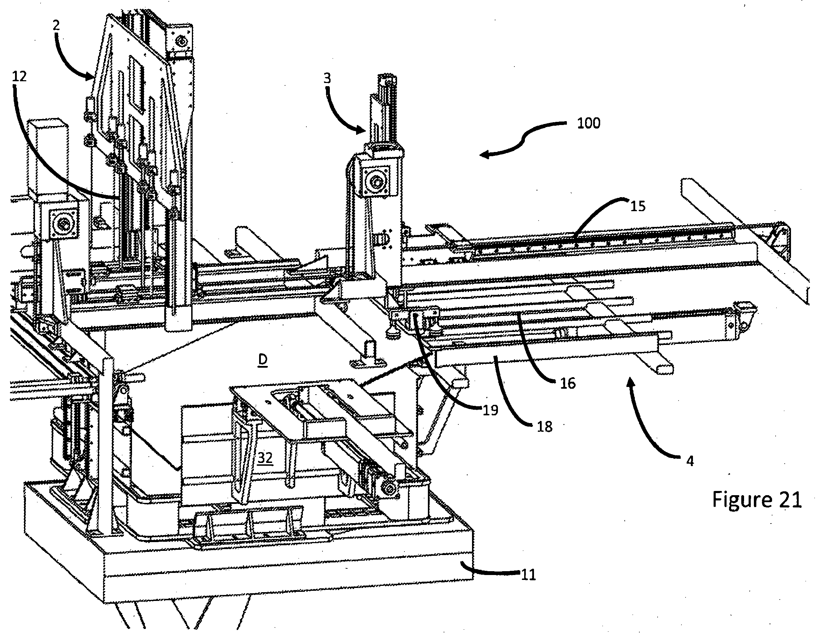

It is envisaged that the stack S may be provided upon a pallet to aid initial disposition thereof upon the pallet riser 1 by, for example, allowing lifting using a fork lift truck or similar. In such a case, it is then also envisaged that, once all of the tiers of the stack S have been transferred to the receptacle 5 and onward to the outfeed of the apparatus 100, that the arm 3 is operated to downwardly extend its abutment portion 17 and to use that abutment portion 17 (shown best in Figure 20) to contact a peripheral edge of the collected divider sheets D on the divider receiver 4, as best shown in Figure 20. The arm 3 is then operated to slide those divider sheets D, using the abutment portion 17, off of the divider receiver 4 and onto the now revealed pallet on the pallet riser 1, as best shown in Figure 21.

The foregoing detailed description relates to a preferred embodiment of an apparatus and to one possible way in which a stack of blanks B may be manipulated. Numerous variations and modifications may be made to the apparatus or the steps of the manipulation of the stack without departing from the scope of the invention as set out in the claims below. In particular, the following variations are contemplated, amongst others.

It is envisaged that two or more of the side and/or rear abutment plates 32, 38 may alternatively share a common drive means such that they are driven in synchronicity with one another.

The arm 3 might be modified to provide some other means of engagement with the divider sheets D, such as mechanical gripping devices for example. It is also envisaged that the arm 3 and divider receiver 4 might not be positioned to the rear of the stack S, and that divider sheets D might be positioned substantially anywhere in the vicinity of the stack S with the arm controllable to transfer divider sheets D from the stack thereto. The arm 3 and divider receiver 4 is, however, an optional feature, and it is envisaged that the stack S may not indeed comprise any such divider sheets D, thereby alleviating any requirement for the arm 3 and divider receiver 4 arrangement.

It is further contemplated that the stack S may be formed in a manner other than successive tiers of 2x3 arrays of groups of blanks B including, amongst others, stacks formed of a single column of blanks B, or of other arrays of groups other than of a 2x3 configuration. It is further contemplated that each tier of the stack S may not necessarily be identical and/or identically orientated. For example, each tier of the stack may be rotated at 90° to an adjacent tier in the stack, and this could be accommodated by a corresponding additional rotation of the stack as a new top tier is raised between the abutment plates.

It will be recognised that as used herein, directional references such as "top", "bottom", "front", "back", "end", "side", "inner", "outer", "upper", "lower", "vertical", "horizontal", "uppermost" and "lowermost" do not limit the respective features to such orientation, but merely serve to aid clarity of explanation.

## Claims

1. An apparatus for manipulating articles initially disposed in a stack comprising a plurality of tiers of articles (S), which apparatus comprises a moveable head (2) and a receptacle (5), the receptacle (5) being disposable adjacent to a stack of articles (S), **characterised in that** the moveable head (2) is operable to abut and transfer a selected group of articles from an uppermost tier of the stack (S) into the receptacle (5), wherein the moveable head (2) comprises a body and a plurality of fingers (12) for sliding said selected group of articles from the stack (S) into the receptacle (5), the apparatus comprising moveable abutment plates (32, 36, 38) that are moveable into contact with one or more adjacent faces of the stack so as to urge the selected group of articles in the uppermost tier of the stack into a predetermined alignment.

2. The apparatus according to claim 1 wherein the predetermined alignment of the selected group of articles is an alignment in which the moveable head (2) is operable to be inserted at least partially into the stack (S) thereby to abut the selected group of articles prior to transferring the selected group of articles to the receptacle (5).

3. The apparatus according to claim 1 or claim 2 wherein the moveable abutment plates (32, 36, 38) include front, rear, and opposite side abutment plates that are together operable to ensure the predetermined alignment of the selected group of articles with respect to the moveable head (2).

4. The apparatus according to any preceding claim wherein the receptacle (5) is moveable between a first position, in which it is located adjacent the selected group of articles in the stack, and a second position, in which the receptacle is spaced from the stack (S).

5. The apparatus according to claim 4 wherein the receptacle (5) is additionally rotatable so as to invert the selected group of articles.

6. The apparatus according to any preceding claim further comprising an arm (3) that is moveable into contact with a surface of the stack (S) and operable to one or more of: a) engage with a divider sheet (D) disposed upon said surface, and subsequently to withdraw that divider sheet (D) from the stack (S) and deposit it in a divider sheet receiver (4); or, b) impose a downward force upon one or more groups of articles of the stack (S), or of a divider sheet (D) of the stack (S), such that the transfer of the aforesaid selected groups of articles do not result in movement of those aforesaid one or more groups of articles, or of that divider sheet (D); or, c) abut a surface of one or more divider sheets (D) held in a receiver (4) adjacent the stack, and to slide those one or more divider sheets (D) from that receiver (4) to a support means upon which the stack (S) was initially disposed.

7. The apparatus according to any preceding claim wherein the receptacle (5) comprises at least one set of rotatable fingers (24, 26) that are operable to rotate into contact with the selected group of articles transferred into the receptacle (5), thereby to retain those selected group of articles in the receptacle (5), and rotatable away from the selected group of articles to transfer the selected group of articles to a transfer element (8) of the apparatus.

8. The apparatus according to claim 7 wherein the transfer element (8) comprises support struts (42) that are configured to pass between the at least one set of fingers (24, 26) of the receptacle (5), such that the support struts (42) may be brought into contact with the selected group of articles held in the receptacle (5) prior to the at least one set of fingers (24, 26) being rotated away from the selected group of articles to transfer the selected group articles to the support struts (42), the support struts (42) being operable to convey the selected group of articles away from the receptacle (5).

9. The apparatus according to any preceding claim further comprising a pallet riser (1) for receiving the stack (S) and operable to one or more of: a) raise the stack (S) such that an upper tier thereof, including the selected group of articles, is disposable adjacent the receptacle (5); or, b) rotate the stack (S) about an axis thereof.

10. The apparatus according to claim 9 wherein the pallet riser (1) is operable, at least, to rotate the stack (S), and wherein the apparatus is operable, after transfer of the selected group of articles from the stack (S) to the receptacle (5), to rotate the stack (S) such that a second selected group of articles in the upper tier is disposed adjacent the receptacle (5), such that subsequent operation of the moveable head (2) may transfer said second selected group of articles into the receptacle (5).

11. The apparatus according to any preceding claim, wherein the moveable head (2) is controllable to manipulate individual tiers of the stack (S), by transferring the articles forming each tier into the receptacle in one or more successive transfer operations before continuing to the next tier of the stack (S).

12. The apparatus according to claim 11, wherein the selected group of articles is one or more of: a) inverted with respect to its desired final orientation at an outfeed of the apparatus; or, b) free of connection between the articles in the selected group; or, c) free of any retaining means for retaining the selected group of articles together in a unit.

13. A method of manipulating articles initially disposed in a stack (S) comprising a plurality of tiers, the method comprises:
moving one or more moveable abutment plates (32, 36, 38) into contact with one or more adjacent faces of the stack (S) so as to urge a selected group of articles in the uppermost tier of the stack (S) into a predetermined alignment;
moving a moveable head (2) comprising a plurality of fingers (12) into abutment with the selected group of articles in the stack (S);
moving a receptacle (5) into a position adjacent to the selected group of articles;
sliding the selected group of articles from the stack (S) into the receptacle (5) by moving the moveable head (2) towards the receptacle (5).

14. The method according to claim 13 wherein the predetermined alignment of the selected group of articles is an alignment in which the moveable head (2) is insertable at least partially into the stack (S) to abut the selected group of articles prior to transferring the selected group of articles to the receptacle (5).

15. The method according to any of claims 13 or 14, further comprising moving the receptacle (5) between a first position in which the receptacle (5) is located adjacent the selected group of articles in the stack (S), and a second position in which the receptacle (5) is spaced from the stack (S).

16. The method according to claim 15, further comprising rotating the receptacle (5) so as to invert the selected group of articles therein.

17. The method according to claims 13 to 16 further comprising one or more of: a) moving an arm (3) into contact with a proximate surface of the stack (S) to engage a divider sheet (D) disposed thereupon, and subsequently withdrawing that divider sheet (D) from.the stack (S) and depositing it in a divider sheet receiver (4) using the arm (3); or, b) moving an arm (3) to impose a downward force upon one or more groups of articles of the stack (S), or of a divider sheet (D) of the stack (S), such that the transfer of the aforesaid selected groups of articles does not result in movement of those aforesaid one or more groups of articles, or of that divider sheet (D); or, c) moving an arm (3) to abut a surface of one or more divider sheets (D) held in a receiver (4) adjacent the stack (S), and to slide those one or more divider sheets (D) from that receiver (4) to a support means upon which the stack (S) was initially disposed.

18. The method according to claims 13 to 17 further comprising supporting the selected group of articles on at least one set of rotatable fingers (24, 26) of the receptacle (5) to retain the selected group of articles in the receptacle (5), and subsequently rotating the at least one set of rotatable fingers (24, 26) away from the selected group of articles to transfer the selected group of articles to a transfer element (8).

19. The method according to claims 13 to 18 further comprising one or more of: a) raising the stack (S) such that an upper tier thereof, including the selected group of articles, is disposable adjacent the receptacle (5); or, b) rotating the stack about an axis thereof to bring a second selected group of articles adjacent the receptacle (5).

20. The method according to claims 13 to 19, further comprising operating the moveable head (2) to manipulate individual tiers of the stack (S) by transferring articles, forming each tier, into the receptacle. (5) in one or more successive transfer operations, before continuing to the next tier of the stack (S).

21. The method according to claim 20, wherein the selected group of articles is one or more of: a) initially inverted with respect to its desired final orientation at an outfeed of the apparatus wherein the method includes using the receptacle (5) to rotate the selected articles; or b) free of connection between the articles in the selected group; or c) free of any retaining means for retaining the selected group of articles together in a unit.

## Patentansprüche

1. Vorrichtung zur Handhabung von Gegenständen, die ursprünglich in einem Stapel angeordnet sind, der eine Vielzahl von Gegenstandsreihen (S) aufweist, wobei die Vorrichtung einen beweglichen Kopf (2) und ein Behältnis (5) umfasst, wobei das Behältnis (5) angrenzend zu einem Stapel von Gegenständen (S) angeordnet ist, **dadurch gekennzeichnet, dass** der bewegliche Kopf (2) eingerichtet ist, an eine ausgewählte Gruppe von Gegenständen anzustoßen und sie von einer obersten Reihe des Stapels (S) in das Behältnis (5) zu überführen, wobei der bewegliche Kopf (2) einen Körper und eine Vielzahl von Fingern (12) umfasst, um die ausgewählte Gegenstandsgruppe von dem Stapel (S) in das Behältnis (5) zu schieben, und wobei die Vorrichtung bewegliche Widerlagerplatten (32, 36, 38) umfasst, die in Kontakt mit einer oder mehreren angrenzenden Flächen des Stapels bewegbar sind, um so die ausgewählte Gegenstandsgruppe in der obersten Reihe des Stapels in eine vorbestimmte Ausrichtung zu zwingen.

2. Vorrichtung nach Anspruch 1, wobei die vorbestimmte Ausrichtung der ausgewählten Gegenstandsgruppe eine Ausrichtung ist, in der der bewegliche Kopf (2) betätigbar ist, wenigstens teilweise in den Stapel (S) eingeführt zu werden und dadurch an die ausgewählte Gegenstandsgruppe anzustoßen, bevor die ausgewählte Gegenstandsgruppe zu dem Behältnis (5) überführt wird.

3. Vorrichtung nach Anspruch 1 oder 2, wobei die beweglichen Widerlagerplatten (32, 36, 38) eine vordere Widerlagerplatte, eine hintere Widerlagerplatte und seitliche Widerlagerplatten umfasst, die zusammen betätigbar sind, um die vorbestimmte Ausrichtung der ausgewählten Gruppe von Gegenständen in Bezug auf den beweglichen Kopf (2) sicherzustellen.

4. Vorrichtung nach einem der vorhergehenden Ansprüche, wobei das Behältnis (5) beweglich ist zwischen einer ersten Position, in der es angrenzend der ausgewählten Gruppe von Gegenständen in dem Stapel angeordnet ist, und einer zweiten Position, in der das Behältnis von dem Stapel (S) beabstandet ist.

5. Vorrichtung nach Anspruch 4, wobei das Behältnis (5) zusätzlich drehbar ist, um so die ausgewählte Gruppe von Gegenständen zu invertieren.

6. Vorrichtung nach einem der vorhergehenden Ansprüche, die ferner einen Arm (3) umfasst, der in Kontakt mit einer Fläche des Stapels (S) bewegbar ist und in eine oder mehrere der folgenden Aktivitäten betätigbar ist: a) Ineingriffnahme mit einer Trennplatte (D), die auf der Fläche angeordnet ist, um nachfolgend die Trennplatte (D) von dem Stapel (S) zurückzuziehen und um sie in einer Trennplattenaufnahme (4) abzulegen; oder b) Aufbringen einer abwärts gerichteten Kraft auf eine oder mehrere Gegenstandsgruppen des Stapels (S) oder auf eine Trennplatte (D) des Stapels (S), derart, dass die Übergabe der vorgenannten ausgewählten Gruppen von Gegenständen nicht in einer Bewegung einer oder mehrerer Gruppen von Gegenständen (B) resultiert oder in einer Bewegung der Trennplatte (D); oder c) Anstoßen an eine Fläche von einer oder mehreren Trennplatten (D), die in der Aufnahme (4) angrenzend des Stapels gehalten sind und Verschieben einer oder mehrerer Trennplatten (D) von der Aufnahme (4) zu einer Stützeinrichtung, auf der der Stapel (S) ursprünglich angeordnet war.

7. Vorrichtung nach einem der vorhergehenden Ansprüche, wobei das Behältnis (5) wenigstens einen Satz rotierbarer Finger (24, 26) aufweist, die betätigbar sind, mit der ausgewählten Gruppe von Gegenständen, die in das Behältnis (5) überführt sind, in Kontakt zu rotieren, um dadurch die ausgewählte Gruppe von Gegenständen in dem Behältnis (5) zurückzuhalten und um sich drehbar von der ausgewählten Gruppe von Gegenständen wegzubewegen, um die ausgewählte Gruppe von Gegenständen zu einer Überführungseinheit (8) der Vorrichtung zu überführen.

8. Vorrichtung nach Anspruch 7, wobei die Überführungseinrichtung (8) Stützholme (42) umfasst, die eingerichtet sind, zwischen dem wenigstens einen Satz von Fingern (24, 26) des Behältnisses (5) hindurchzugehen, derart, dass die Stützholme (42) mit der ausgewählten Gruppe von Gegenständen, die in dem Behältnis (5) gehalten werden, in Kontakt gebracht werden können, und zwar bevor der wenigstens eine Satz von Fingern (24, 26) von der ausgewählten Gruppe von Gegenständen wegrotiert wird, um die ausgewählte Gruppe von Gegenständen zu den Stützholmen (42) zu überführen, wobei die Stützholme (42) betätigbar sind, um die ausgewählte Gruppe von Gegenständen weg von dem Behältnis (5) zu fördern.

9. Vorrichtung nach einem der vorhergehenden Ansprüche, die weiterhin eine Stapelplatten-Steigstufe (1) zum Aufnehmen des Stapels (S) umfasst und betätigbar ist, eine oder mehrere der nachfolgenden Aktivitäten auszuführen: a) Anheben des Stapels (S), derart, dass eine obere Reihe des Stapels, die die ausgewählte Gruppe von Gegenständen umfasst, angrenzend des Behältnisses (5) anordenbar ist; oder b) Rotieren des Stapels (S) um eine Achse des Stapels.

10. Vorrichtung nach Anspruch 9, wobei die Stapelplatten-Steigstufe (1) betätigbar ist, um wenigstens den Stapel (S) zu rotieren, und wobei die Vorrichtung betätigbar ist, den Stapel (S) nach dem Transfer der ausgewählten Gruppe von Gegenständen von dem Stapel (S) an das Behältnis (5) zu rotieren, derart, dass eine zweite ausgewählte Gruppe von Gegenständen in der oberen Reihe angrenzend des Behältnisses (5) angeordnet ist, derart, dass eine anschließende Betätigung des beweglichen Kopfs (2) die zweite ausgewählte Gruppe von Gegenständen in das Behältnis überführen kann.

11. Vorrichtung nach einem der vorhergehenden Ansprüche, wobei der bewegliche Kopf (2) steuerbar ist, individuelle Reihen des Stapels (S) zu manipulieren, und zwar durch Überführen der Gegenstände, die jeweils eine Reihe formen, in das Behältnis, und zwar in einer oder mehreren aufeinanderfolgenden Transferoperationen vor Abarbeiten der nächsten Reihe des Stapels (S).

12. Vorrichtung nach Anspruch 11, wobei die ausgewählte Gruppe von Gegenständen in einem oder mehreren der nachfolgenden Zustände ist: a) invertiert in Bezug auf ihre gewünschte letztendliche Orientierung an einem Auslass der Vorrichtung; oder b) frei von einer Verbindung zwischen den Gegenständen in der ausgewählten Gruppe; oder c) frei von jedweden Rückhalteeinrichtungen, die hergerichtet sind, die ausgewählte Gruppe von Gegenständen in einer Einheit zurückzuhalten.

13. Verfahren zum Handhaben von Gegenständen, die ursprünglich in einem Stapel (S), der eine Vielzahl von Reihen umfasst, angeordnet sind, wobei das Verfahren umfasst:
Bewegen einer oder mehrerer bewegbarer Widerlagerplatten (32, 36, 38) in Kontakt mit einer oder mehreren angrenzenden Flächen des Stapels (S), derart, um eine ausgewählte Gruppe von Gegenständen in der obersten Reihe des Stapels (S) in eine vorbestimmte Ausrichtung zu zwingen;
Bewegen eines beweglichen Kopfs (2), der eine Vielzahl von Fingern (12) umfasst, in eine anstoßende Beziehung mit der ausgewählten Gruppe von Gegenständen in dem Stapel (S);
Bewegen eines Behältnisses (5) in eine Position angrenzend der ausgewählten Gruppe von Gegenständen;
Schieben der ausgewählten Gruppe der Gegenstände von dem Stapel (S) in das Behältnis (5) durch Bewegen des bewegbaren Kopfs (2) hin zu dem Behältnis (5).

14. Verfahren nach Anspruch 13, wobei die vorbestimmte Ausrichtung der ausgewählten Gruppe von Gegenständen eine Ausrichtung ist, in der der bewegliche Kopf (2) wenigstens teilweise in den Stapel (S) einführbar ist, um an die ausgewählte Gruppe der Gegenstände vor Überführung der ausgewählten Gruppe von Gegenständen in dem Behältnis (5) anzustoßen.

15. Verfahren nach einem der Ansprüche 13 oder 14, ferner umfassend das Bewegen des Behältnisses (5) zwischen einer ersten Position, in der das Behältnis (5) angrenzend der ausgewählten Gruppe der Gegenstände in dem Stapel (S) angeordnet ist, und einer zweiten Position, in der das Behältnis (5) von dem Stapel (S) beabstandet ist.

16. Verfahren nach Anspruch 15, ferner umfassend Rotieren des Behältnisses (5), um so die darin befindliche ausgewählte Gruppe von Gegenständen zu invertieren.

17. Verfahren nach einem der Ansprüche 13 bis 16, ferner umfassend einen oder mehrere der folgenden Schritte: a) Bewegen eines Arms (3) in Kontakt mit einer angrenzenden Fläche des Stapels (S), um eine Trennplatte (D), die darauf angeordnet ist, in Eingriff zu nehmen, und anschließendes Zurückziehen der Trennplatte (D) von dem Stapel (S) und Ablegen derselben in einer Trennplattenaufnahme (4) unter Verwendung des Arms (3); oder b) Bewegen eines Arms (3), um eine nach unten gerichtete Kraft auf eine oder mehrere Gruppen von Gegenständen des Stapels (S) oder auf eine Trennplatte (D) des Stapels (S) aufzubringen, derart, dass die Überführung der vorgenannten ausgewählten Gruppen von Gegenständen nicht in einer Bewegung der vorgenannten einen oder mehreren Gruppen von Gegenständen (B) oder der Trennplatte (D) resultiert; oder c) Bewegen eines Arms (3), um an eine Fläche einer oder mehrerer Trennplatten (D), die in einer Aufnahme (4) angrenzend des Stapels (S) gehalten sind, anzustoßen, und um eine oder mehrere Trennplatten (D) von der Aufnahme (4) zu einer Stützeinrichtung, auf der der Stapel (S) ursprünglich angeordnet war, zu schieben.

18. Verfahren nach einem der Ansprüche 13 bis 17, ferner umfassend Stützen der ausgewählten Gruppe von Gegenständen auf wenigstens einem Satz rotierbarer Finger (24, 26) des Behältnisses (5), um die ausgewählte Gruppe von Gegenständen in dem Behältnis (5) zurückzuhalten, und anschließendes Rotieren des wenigstens einen Satzes rotierbarer Finger (24, 26) weg von der ausgewählten Gruppe von Gegenständen, um die ausgewählte Gruppe von Gegenständen an eine Transfereinrichtung (8) zu überführen.

19. Verfahren nach einem der Ansprüche 13 bis 18, ferner umfassend einen oder mehrere der folgenden Schritte: a) Anheben des Stapels (S), derart, dass eine obere Reihe des Stapels, die die ausgewählte Gruppe von Gegenständen enthält, angrenzend des Behältnisses (5) anordenbar ist; oder b) Rotieren des Stapels um eine Achse des Stapels, um eine zweite ausgewählte Gruppe von Gegenständen in angrenzende Beziehung mit dem Behältnis (5) zu bringen.

20. Verfahren nach einem der Ansprüche 13 bis 19, ferner umfassend das Betätigen des beweglichen Kopfs (2), um individuelle Reihen des Stapels (S) durch Überführen von Gegenständen, die jeweils eine Reihe bilden, zu manipulieren, und zwar in das Behältnis (5) in einer oder mehreren aufeinanderfolgenden Transferoperationen, bevor die Handhabung der nächsten Reihe des Stapels (S) beginnt.

21. Verfahren nach Anspruch 20, wobei die ausgewählte Gruppe von Gegenständen eine oder mehrere der nachfolgenden Positionen hat: a) ursprünglich invertiert in Bezug auf deren gewünschte letztendliche Ausrichtung an einem Auslass der Vorrichtung, wobei das Verfahren die Verwendung des Behältnisses (5) zum Rotieren der ausgewählten Gegenstände einschließt; oder b) frei von einer Verbindung zwischen den Gegenständen in der ausgewählten Gruppe; oder c) frei von jedweden Rückhalteeinrichtungen, die dazu dienen, die ausgewählte Gruppe von Gegenständen in einer Einheit zu halten.

## Revendications

1. Dispositif pour manipuler des articles initialement disposés en une pile comprenant une pluralité de couches d'articles (S), ledit dispositif comportant une tête mobile (2) et un bac (5), le bac (5) pouvant être disposé au voisinage immédiat d'une pile d'articles (S), **caractérisé en ce que** la tête mobile (2) est actionnable pour venir buter contre et transférer un groupe choisi d'articles depuis une couche supérieure de la pile (S) jusque dans le bac (5), la tête mobile (2) comprenant un corps et une pluralité de doigts (12) pour faire glisser ledit groupe choisi d'articles depuis la pile (S) jusque dans le bac (5), le dispositif comportant des plaques de butée mobiles (32, 36, 38) qui peuvent venir au contact d'une ou de plusieurs faces adjacentes de la pile afin d'amener le groupe choisi d'articles de la couche supérieure de la pile à prendre un alignement prédéterminé.

2. Dispositif selon la revendication 1, dans lequel l'alignement prédéterminé du groupe choisi d'articles est un alignement dans lequel la tête mobile (2) est actionnable pour être insérée au moins partiellement dans la pile (S) afin de buter de la sorte contre le groupe choisi d'articles avant de transférer dans le bac (5) le groupe choisi d'articles.

3. Dispositif selon la revendication 1 ou la revendication 2, dans lequel les plaques de butée mobiles (32, 36, 38) comprennent des plaques de butée avant, arrière et latérales opposées qui servent conjointement à assurer l'alignement prédéterminé du groupe choisi d'articles par rapport à la tête mobile (2).

4. Dispositif selon l'une quelconque des revendications précédentes, dans lequel le bac (5) est mobile entre une première position, dans laquelle il se trouve au voisinage immédiat du groupe choisi d'articles dans la pile, et une seconde position dans laquelle le bac est espacé de la pile (S).

5. Dispositif selon la revendication 4, dans lequel le bac (5) peut en outre être amené à tourner afin d'inverser le groupe choisi d'articles.

6. Dispositif selon l'une quelconque des revendications précédentes, comportant en outre un bras (3) pouvant venir au contact d'une surface de la pile (S) et étant actionnable pour : a) venir contre une feuille de séparation (D) disposée sur ladite surface, puis retirer cette feuille de séparation (D) de la pile (S) et la déposer dans un récepteur (4) de feuille de séparation, et/ou b) exercer une force orientée vers le bas sur un ou plusieurs groupes de la pile (S), ou sur une feuille de séparation (D) de la pile (S), de façon que le transfert desdits groupes choisis d'articles ne fasse bouger ni ledit/lesdits groupe(s) d'articles (B) ni cette feuille de séparation (D) ; et/ou c) buter contre une surface d'une ou de plusieurs feuilles de séparation (D) contenues dans un récepteur (4) au voisinage immédiat de la pile, et faire glisser cette/ces feuille(s) de séparation (D) depuis ce récepteur (4) jusqu'à un moyen de support sur lequel était initialement disposée la pile (S).

7. Dispositif selon l'une quelconque des revendications précédentes, dans lequel le bac (5) comprend au moins une série de doigts rotatifs (24, 26) qui sont actionnables afin de tourner jusqu'à venir au contact du groupe choisi d'articles transférés dans le bac (5) pour ainsi retenir dans le bac (5) le groupe choisi d'articles, et qui peuvent s'écarter en tournant du groupe choisi d'articles pour transférer le groupe choisi d'articles afin de transférer le groupe choisi d'articles jusqu'à un élément de transfert (8) du dispositif.

8. Dispositif selon la revendication 7, dans lequel l'élément de transfert (8) comprend des montants de support (42) conçus pour passer entre la/les série(s) de doigt(s) (24, 26) du bac (5) de façon que les montants de support (42) puissent être mis au contact du groupe choisi d'articles contenus dans le bac (5) avant que la/les série(s) de doigt(s) (24, 26) ne soient amenées à tourner pour s'écarter du groupe choisi d'articles afin de transférer le groupe choisi d'articles sur les montants de support (42), les montants de support (42) servant à éloigner du bac (5) le groupe choisi d'articles.

9. Dispositif selon l'une quelconque des revendications précédentes, comportant en outre un élévateur (1) de palette destiné à recevoir la pile (S) et servant à : a) élever la pile (S) de façon qu'une couche supérieure de celle-ci, comprenant le groupe choisi d'articles, puisse être disposée au voisinage immédiat du bac (5) ; et/ou b) faire tourner la pile (S) autour d'un axe de celle-ci.

10. Dispositif selon la revendication 9, dans lequel l'élévateur (1) de palette peut servir, au moins, à faire tourner la pile (S), et le dispositif pouvant servir, après le transfert du groupe choisi d'articles de la pile (S) au bac (5), à faire tourner la pile (S) de façon qu'un second groupe choisi d'articles de la couche supérieure soit disposé au voisinage immédiat du bac (5), de telle sorte que l'actionnement ultérieur de la tête mobile (2) puisse transférer dans le bac (5) ledit second groupe choisi d'articles.

11. Dispositif selon l'une quelconque des revendications précédentes, dans lequel la tête mobile (2) peut être commandée pour manipuler des couches individuelles de la pile (S) en transférant les articles formant chaque couche dans le bac en une ou plusieurs opérations de transfert successives avant de passer à la couche suivante de la pile (S).

12. Dispositif selon la revendication 11, dans lequel le groupe choisi d'articles est : a) inversé par rapport à son orientation finale voulue à une sortie du dispositif ; et/ou b) sans liaison entre les articles du groupe choisi ; et/ou c) sans moyen de retenue pour conserver l'unité du groupe choisi d'articles.

13. Procédé pour manipuler des articles initialement disposés en une pile (S) comprenant une pluralité de couches, le procédé comportant :
la mise d'une ou de plusieurs plaques de butée mobiles (32, 36, 38) au contact d'une ou de plusieurs faces adjacentes de la pile (S) afin d'amener un groupe choisi d'articles de la couche supérieure de la pile (S) à prendre un alignement prédéterminé ;
la mise d'une tête mobile (2) comprenant une pluralité de doigts (12) en butée contre le groupe choisi d'articles de la pile (S) ;
la mise d'un bac (5) dans une position adjacente au groupe choisi d'articles ;
le glissement du groupe choisi d'articles depuis la pile (S) jusque dans le bac (5) par un déplacement de la tête mobile (2) vers le bac (5).

14. Procédé selon la revendication 13, dans lequel l'alignement prédéterminé du groupe choisi d'articles est un alignement dans lequel la tête mobile (2) est insérable au moins partiellement dans la pile (S) pour venir buter contre le groupe choisi d'articles avant de transférer le groupe choisi d'articles dans le bac (S).

15. Procédé selon l'une quelconque des revendications 13 et 14, comportant en outre la mise du bac (5) entre une première position, dans laquelle le bac (5) est situé au voisinage immédiat du groupe choisi d'articles dans la pile (S), et une seconde position dans laquelle le bac (5) est espacé de la pile (S)..

16. Procédé selon la revendication 15, comportant en outre une rotation du bac (5) afin d'y inverser le groupe choisi d'articles.

17. Procédé selon les revendications 13 à 16, comportant en outre : a) la mise d'un bras (3) au contact d'une surface adjacente de la pile (S) pour venir contre une feuille de séparation (D) disposée sur celle-ci, puis le retrait de cette feuille de séparation (D) de la pile (S) et le dépôt de celle-ci dans un récepteur (4) de feuille de séparation à l'aide du bras (3) ; et/ou b) le déplacement d'un bras (3) pour exercer une force orientée vers le bas sur un ou plusieurs groupes de la pile (S), ou sur une feuille de séparation (D) de la pile (S), de façon que le transfert desdits groupes choisis d'articles ne fasse bouger ni ledit/lesdits groupe(s) d'articles (B) ni cette feuille de séparation (D) ; et/ou c) le déplacement d'un bras (3) pour qu'il vienne buter contre une surface d'une ou de plusieurs feuilles de séparation (D) contenues dans un récepteur (4) au voisinage immédiat de la pile (S), et pour faire glisser cette/ces feuille(s) de séparation (D) depuis ce récepteur (4) jusqu'à un moyen de support sur lequel était initialement disposée la pile (S).

18. Procédé selon les revendications 13 à 17, comportant en outre le support du groupe choisi d'articles par au moins une série de doigts rotatifs (24, 26) du bac (5) afin de retenir le groupe choisi d'articles dans le bac (5), puis une rotation de la/des série(s) de doigts rotatifs (24, 26) pour les écarter du groupe choisi d'articles afin de transférer le groupe choisi d'articles jusqu'à un élément de transfert (8).

19. Procédé selon les revendications 13 à 18, comportant en outre : a) une élévation de la pile (S) de façon qu'une couche supérieure de celle-ci, comprenant le groupe choisi d'articles, puisse être disposée au voisinage immédiat du bac (5) ; et/ou b) une rotation de la pile autour d'un axe de celle-ci pour mettre un second groupe choisi d'articles au voisinage immédiat du bac (5).

20. Procédé selon les revendications 13 à 19, comportant en outre un actionnement de la tête mobile (2) pour manipuler des couches individuelles de la pile (S) en transférant des articles, formant chaque couche, dans le bac (5) en une ou plusieurs opérations de transfert successives avant de passer à la couche suivante de la pile (S).

21. Procédé selon la revendication 20, dans lequel le groupe choisi d'articles est : a) initialement inversé par rapport à son orientation finale voulue à une sortie du dispositif, le procédé comportant l'utilisation du bac (5) pour faire tourner les articles choisis ; et/ou b) sans liaison entre les articles du groupe choisi ; et/ou c) sans moyen de retenue pour conserver l'unité du groupe choisi d'articles.
